(19) Europäisches Patentamt
European Patent Office
Office européen des brevets

(11) **EP 4 571 653 A1**

(12) **EUROPEAN PATENT APPLICATION**
published in accordance with Art. 153(4) EPC

(43) Date of publication:
**18.06.2025 Bulletin 2025/25**

(21) Application number: **24766177.0**

(22) Date of filing: **09.01.2024**

(51) International Patent Classification (IPC):
***G06T 13/40*** (2011.01)    ***G06T 17/00*** (2006.01)
***G06T 7/73*** (2017.01)

(52) Cooperative Patent Classification (CPC):
Y02T 10/40

(86) International application number:
**PCT/CN2024/071344**

(87) International publication number:
**WO 2024/183454 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **06.03.2023  CN 202310244258**

(71) Applicant: **Tencent Technology (Shenzhen) Company Limited**
**Shenzhen, Guangdong 518057 (CN)**

(72) Inventors:
• **ZHANG, Baocheng**
  **Shenzhen, Guangdong 518057 (CN)**
• **FU, Xinghui**
  **Shenzhen, Guangdong 518057 (CN)**
• **CHENG, Qingrong**
  **Shenzhen, Guangdong 518057 (CN)**
• **LI, Zhuo**
  **Shenzhen, Guangdong 518057 (CN)**
• **GE, Wenhao**
  **Shenzhen, Guangdong 518057 (CN)**
• **SUN, Zhongqian**
  **Shenzhen, Guangdong 518057 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **VIRTUAL OBJECT ANIMATION GENERATION METHOD AND APPARATUS, ELECTRONIC DEVICE, COMPUTER-READABLE STORAGE MEDIUM, AND COMPUTER PROGRAM PRODUCT**

(57)    Provided are a video frame data processing method and apparatus, a device, and a computer-readable storage medium. The method includes: obtaining an input video, and determining initial three-dimensional (3D) pose information, two-dimensional (2D) pose information, and foot ground contact information of an object in the input video; determining pose change information between adjacent video frames based on the initial 3D pose information of the object; determining pose information of the object based on the initial 3D pose information of the object and the pose change information; performing correction processing on the pose information of the object based on the 2D pose information and the foot ground contact information of the object, to obtain corrected pose information of the object; and applying the corrected pose information to a virtual object, to generate a virtual object video for the input video.

Obtain an input video, and determine initial 3D pose information, 2D pose information, and foot ground contact information of an object in the input video — 101

Determine pose change information between two adjacent video frames of the input video based on the initial 3D pose information of the object — 102

Determine pose information of the object based on the initial 3D pose information of the object and the pose change information — 103

Perform correction processing on the pose information of the object based on the 2D pose information and the foot ground contact information of the object, to obtain corrected pose information of the object — 104

Applying the corrected pose information to a virtual object, to generate a virtual object video for the input video — 105

FIG. 3A

**Description**

RELATED APPLICATION

This application is proposed based on and claims priority to Chinese Patent Application No. 202310244258.5 filed on March 6, 2023.

FIELD OF THE TECHNOLOGY

This application relates to image processing technologies, and in particular, to a video frame data processing method and apparatus, an electronic device, a computer-readable storage medium, and a computer program product.

BACKGROUND OF THE DISCLOSURE

In the related art, motion retargeting is widely applied to video processing, and motion capture is a key technology of motion retargeting. Motion capture refers to recording movement of an object in a three-dimensional (3D) space, and simulating a movement trajectory of the object into a digital model. For example, poses and actions of an actor are captured by detecting and recording a movement trajectory of a body of the actor in the 3D space, and the captured poses and motions are converted into digitalized abstract actions, to control a virtual model in a software application to perform the same actions as the actor, to generate a video sequence. In recent years, the motion capture technology is widely applied to many fields such as virtual reality (VR), 3D games, and human body bioengineering. In the related art, motion capture may be implemented by using an optical motion capture method, an inertial motion capture method, and an end-to-end video motion capture method. The optical motion capture method and the inertial motion capture method need to use an external device and a site to perform motion capture, leading to relatively high costs. Limited by insufficient training data, the end-to-end video motion capture method is relatively weak in generalization and has a relatively poor motion capture effect. When captured motions are retargeted to a virtual object, problems such as poor motion continuity and inaccurate execution of the motions are caused.

SUMMARY

Embodiments of this application provide a video frame data processing method and apparatus, an electronic device, a computer-readable storage medium, and a computer program product, which can ensure accuracy of motions obtained through motion capture while reducing costs of the motion capture.
Technical solutions in the embodiments of this application are implemented as follows:
An embodiment of this application provides a video frame data processing method, including:

obtaining an input video, and determining initial 3D pose information, two-dimensional (2D) pose information, and foot ground contact information of an object in the input video;

determining pose change information between two adj acent video frames of the input video based on the initial 3D pose information of the object;

determining pose information of the object based on the initial 3D pose information of the object and the pose change information;

performing correction processing on the pose information of the object based on the 2D pose information and the foot ground contact information of the object, to obtain corrected pose information of the object; and

applying the corrected pose information to a virtual object, to generate a virtual object video for the input video.

An embodiment of this application provides a video frame data processing apparatus, including:

a first obtaining module, configured to obtain an input video, and determine initial 3D pose information, 2D pose information, and foot ground contact information of an object in the input video;

a first determining module, configured to determine pose change information between adjacent video frames based on the initial 3D pose information of the object;

a second determining module, configured to determine pose information of the object based on the initial 3D pose information of the object and the pose change information between the adjacent video frames;

a first processing module, configured to perform correction processing on the pose information of the object based on the 2D pose information and the foot ground contact information of the object, to obtain corrected pose information of the object; and

a motion application module, configured to apply the corrected pose information to a virtual object, to generate a virtual object video for the input video.

An embodiment of this application provides an electronic device, including:

a memory, configured to store a computer-executable instruction; and

a processor, configured to execute the computer-executable instruction stored in the memory to implement the video frame data processing method according to the embodiments of this application.

An embodiment of this application provides a computer-readable storage medium, storing a computer-executable instruction, the computer-executable instruction, when executed by a processor, implementing the video frame data processing method according to the embodiments of this application.

An embodiment of this application provides a computer program product, including a computer program or a computer-executable instruction, the computer program or the computer-executable instruction, when executed by a processor, implementing the video frame data processing method according to the embodiments of this application.

The embodiments of this application have the following beneficial effects:

After an input video is obtained, initial 3D pose information, 2D pose information, and foot ground contact information of an object in the input video are first determined, and then, pose change information between adjacent video frames is determined based on the initial 3D pose information of the object. The pose change information serves as a motion prior in combination with initial 3D pose information of each video frame, to determine pose information, and then correction processing is performed on the pose information of the object based on the 2D pose information and the foot ground contact information of the object, to obtain corrected pose information of the object. Because the pose information of the object is determined based on the pose change information serving as the motion prior and the initial 3D pose information of each video frame, during the correction of the pose information, the pose change information is actually corrected. This not only can improve correction efficiency, thus improving motion capture efficiency, but also can ensure motion continuity and appropriateness of a virtual object video obtained by applying the corrected pose information to a virtual object.

BRIEF DESCRIPTION OF THE DRAWINGS

FIG. 1 is a schematic structural diagram of an architecture of a motion capture system 100 according to an embodiment of this application.

FIG. 2 is a schematic structural diagram of a server 400 according to an embodiment of this application.

FIG. 3A is a schematic flowchart of a video frame data processing method according to an embodiment of this application.

FIG. 3B is a schematic flowchart of an implementation of determining initial 3D pose information, 2D pose information, and foot ground contact information of an object according to an embodiment of this application.

FIG. 3C is a schematic flowchart of an implementation of determining pose change information according to an embodiment of this application.

FIG. 3D is a schematic flowchart of an implementation of training a motion prior model according to an embodiment of this application.

FIG. 4A is a schematic flowchart of an implementation of determining pose information according to an embodiment of this application.

FIG. 4B is a schematic flowchart of an implementation of performing correction processing on the pose information according to an embodiment of this application.

FIG. 4C is a schematic flowchart of an implementation of determining a reprojection error according to an embodiment of this application.

FIG. 5A is a schematic flowchart of an implementation of determining prior information according to an embodiment of this application.

FIG. 5B is a schematic flowchart of an implementation of determining a regular error according to an embodiment of this application.

FIG. 5C is another schematic flowchart of a video frame data processing method according to an embodiment of this application.

FIG. 6 is a schematic diagram of a joint point tree according to an embodiment of this application.

FIG. 7A shows a human body mesh obtained under a base template established by using a skinned multi-person linear (SMPL) model according to an embodiment of this application.

FIG. 7B shows a human body mesh obtained under a base template established by using an SMPL model according to an embodiment of this application.

FIG. 7C is a schematic diagram of a human body model obtained after adjusting shape parameters according to an embodiment of this application.

FIG. 8A is still another schematic flowchart of a video frame data processing method according to an embodiment of this application.

FIG. 8B is a schematic flowchart of overall processing of a video frame data processing method according an embodiment of this application.

FIG. 9 is a schematic diagram of a network structure of a 3D pose estimation module according to an embodiment of this application.

FIG. 10A is a schematic diagram of a network structure of a 2D pose estimation module according to an embodiment of this application.

FIG. 10B is a schematic diagram of a network structure of a foot ground contact prediction module according to an embodiment of this application.

FIG. 10C is a schematic diagram of a variational autoencoder according to an embodiment of this application.

FIG. 10D is a schematic diagram of a network structure of a motion prior model according to an embodiment of this application.

FIG. 11 is a schematic diagram of an application interface of a video frame data processing according to an embodiment of this application in an unreal engine.

DESCRIPTION OF EMBODIMENTS

To make the objectives, technical solutions, and advantages of this application clearer, the following describes this application in further detail with reference to the accompanying drawings. The described embodiments are not to be considered as a limitation to this application. All other embodiments obtained by a person of ordinary skill in the art without creative efforts shall fall within the protection scope of this application.

In the following description, the term "some embodiments" describes subsets of all possible embodiments, but "some embodiments" may be the same subset or different subsets of all the possible embodiments, and can be combined with each other without conflict.

In the following description, the terms "first", "second", and "third" are merely intended to distinguish between similar objects rather than describe a specific order of objects. The terms "first", "second", and "third" may, where permitted, be interchangeable in a particular order or sequence, so that embodiments of this application described herein may be performed in an order other than that illustrated or described herein.

In the embodiments of this application, the term "module" or "unit" refers to a computer program having a predetermined function or a part of a computer program, and works together with other related parts to achieve a predetermined objective, and may be fully or partially implemented by using software, hardware (such as a processing circuit or a memory), or a combination thereof. Similarly, one processor (or a plurality of processors or memories) may be configured to implement one or more modules or units. In addition, each module or unit may be a part of an integral module or unit including a function of the module or unit.

Unless otherwise defined, meanings of all technical and scientific terms used in this specification are the same as those usually understood by a person skilled in the art to which this application belongs. Terms used in this specification are merely intended to describe objectives of the embodiments of this application, and are not intended to limit this application.

Before the embodiments of this application are further described in detail, a description is made on nouns and terms in the embodiments of this application, and the nouns and terms in the embodiments of this application are applicable to the following explanations.

(1) Motion capture, also referred to as movement capture, refers to recording movement of an object in a 3D space, and simulating a movement trajectory of the object into a digital model.

(2) SMPL is a skinned, vertex-based 3D human body model, and can accurately represent different shapes and poses of a human body.

A key technology in a video frame data processing is motion capture. To better understand the video frame data processing provided in the embodiments of this application, implementation processes of the optical motion capture method, the inertial motion capture method, and the end-to-end video motion capture method provided in the related art and disadvantages are described first.

In an optical motion capture system, based on a computer vision (CV) principle, a plurality of high-speed cameras recognize continuity of target feature points from different angles, and complete motion capture in combination with a skeleton solving algorithm. Theoretically, for any point in space, provided that the point can be captured by at least two cameras at the same time, a 3D position of the point in space at this moment can be determined. When the camera performs continuous shooting at a high frame rate, a movement trajectory of the point can be obtained from an image sequence. This technology requires the construction of a specialized venue, requires no visible interference around, and requires a specialized actor to wear an optical motion capture device for capturing actions. Although the accuracy of capture results is high, the optical motion capture technology has high usage costs as there are requirements for venues, devices, and personnel.

The inertial motion capture technology requires an inertial sensor device such as an integrated accelerometer, gyroscope, and magnetometer to be worn on an important node of a human body. The sensor device captures motion data of an object, including information such as a pose and an orientation of a body part, and then transmits the data to a data processing device through a data transmission device. After data correction and processing, a 3D model is finally established, and the 3D model is enabled to truly and naturally move with the human body. This technology requires a professional actor to wear a particular device. Due to a precision problem of an inertial device, a capture effect is worse than that of the optical motion capture technology, and a problem that heels of a virtual character are clinging to the ground cannot be resolved.

The end-to-end video motion capture method needs to obtain 3D human body data in a real environment, which is very difficult. During implementation of the technology, not only a camera is required, but also an additional device is required. Therefore, it is very difficult to directly output a 3D position by using a picture as a network input. To resolve the problem of insufficient data, in this solution, training is performed in a manner of changing the background and changing human clothes, but a capture effect is not good.

Based on this, the embodiments of this application provide a video frame data processing method and apparatus, and a device, and a computer-readable storage medium, so that a human body action prior can be introduced based on end-to-end prediction, and precision meets an actual application requirement through further iterative optimization. In addition, compared with optical motion capture and inertial motion capture, this solution does not need additional scenarios and devices, and only needs a monocular video, thereby expanding an application scenario of motion capture. The following describes an exemplary application of a computer device provided in the embodiments of this application. The device provided in the embodiments of this application may be implemented as various types of user terminals such as a laptop computer, a tablet computer, a desktop computer, a set-top box, and a mobile device (for example, a mobile phone, a portable music player, a personal digital assistant, a dedicated messaging device, and a portable gaming device), or may be implemented as a server. The following describes an exemplary application in which the device is implemented as a server.

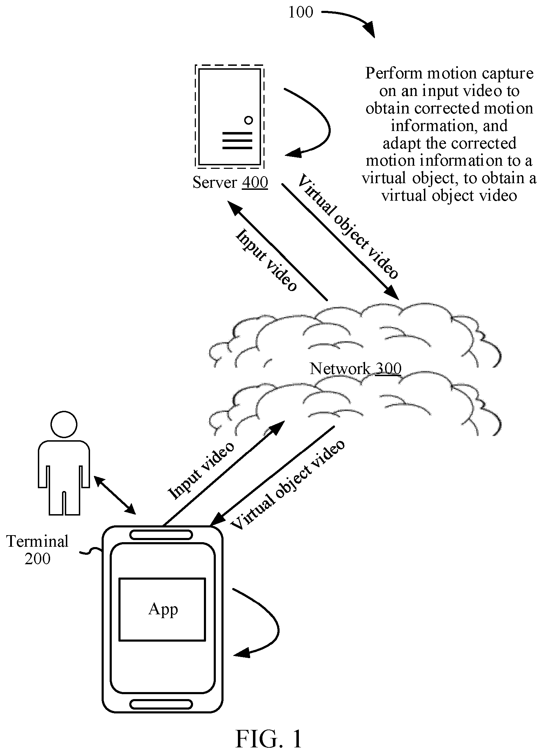

Referring to FIG. 1, FIG. 1 is a schematic diagram of an architecture of a motion capture system 100 according to an embodiment of this application. To support a motion capture application, terminals (a terminal 200-1 and a terminal 200-2 are exemplarily shown) are connected to a server 400 through a network 300. The network 300 may be a wide area network, a local area network, or a combination thereof.

In the motion capture system, a terminal 200 is configured to at least capture a video, and transmit the captured video to the server 400 through the network 300. The server 400 performs motion capture processing or stores the captured video into a database 500. The terminal 200 may use an image acquisition apparatus in the terminal to perform video capture.

The server 400 obtains an input video. The input video may be a video to be processed, which is a video obtained from the terminal 200, or may be a prestored video obtained from the database 500. Then, the server 400 determines initial 3D pose information, 2D pose information, and foot ground contact information of an object in the input video; then determines pose change information between two adjacent video frames of the input video based on the initial 3D pose information of the object; determines pose information of the object based on the initial 3D pose information of the object and the pose change information; and performs correction processing on the pose information of the object based on the 2D pose information and the foot ground contact information of the object, to obtain corrected pose information of the object, and finally, applies the corrected pose information to a virtual object, to generate a virtual object video for the input video. Because the pose information of the object is determined based on the pose change information serving as a motion prior, during the correction of the pose information, the pose change information is actually corrected. This not only can improve correction efficiency, thus improving motion capture efficiency, but also can ensure motion continuity and appropriateness of the virtual object video obtained by applying the corrected pose information to the virtual object. Subsequently, the server 400 transmits the virtual object video to the terminal 200, so that the terminal 200 plays the virtual object video. The virtual object performs an action for the corrected pose information in the virtual object video.

In some embodiments, the server 400 may be an independent physical server, or may be a server cluster or a distributed system including a plurality of physical servers, or may be a cloud server providing basic cloud computing services, such as a cloud service, a cloud database, cloud computing, a cloud function, cloud storage, a network service, cloud communication, a middleware service, a domain name service, a security service, a content delivery network (CDN), and a big data and artificial intelligence (AI) platform. The terminal 200 may be a smartphone, a tablet computer, a laptop computer, a desktop computer, a smart speaker, a smartwatch, an in-vehicle terminal, or the like, but is not limited thereto. The terminal and the server may be directly or indirectly connected in a wired or wireless communication protocol. This is not limited in the embodiments of this application.

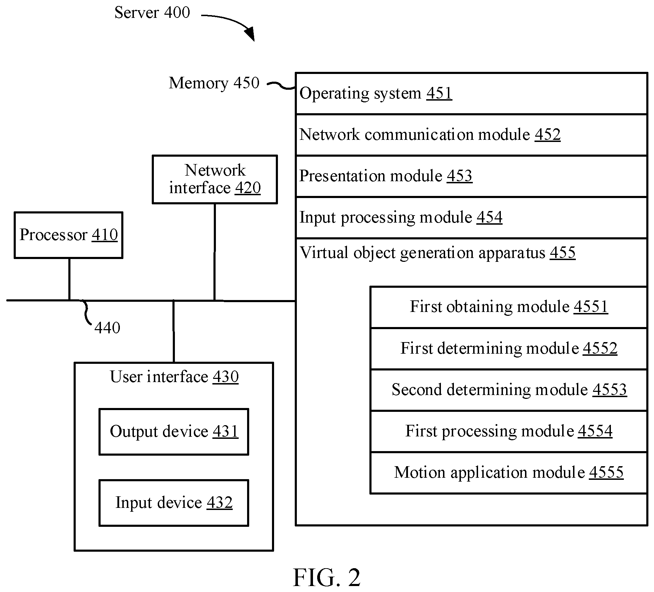

Referring to FIG. 2, FIG. 2 is a schematic structural diagram of a server 400 according to an embodiment of this application. The server 400 shown in FIG. 2 includes at least one processor 410, a memory 450, at least one network interface 420, and a user interface 430. Components in the server 400 are coupled together through a bus system 440. The bus system 440 is configured to implement connection and communication between the components. In addition to a data bus, the bus system 440 also includes a power bus, a control bus, and a status signal bus. However, for clarity of description, all types of buses in FIG. 2 are marked as the bus system 440.

The processor 410 may be an integrated circuit chip with a signal processing capability, such as a general-purpose processor, a digital signal processor (DSP), or another programmable logic device, discrete gate, transistor logic device, or discrete hardware component. The general-purpose processor may be a microprocessor, any conventional processor, or the like.

The user interface 430 includes one or more output devices 431 that enable presentation of media content, including one or more speakers and/or one or more visual display screens. The user interface 430 further includes one or more input devices 432, including a user interface component that facilitates user input, such as a keyboard, a mouse, a microphone, a touchscreen, a camera, and other input buttons and controls.

The memory 450 may be removable, non-removable, or a combination thereof. An exemplary hardware device includes a solid state memory, a hard disk drive, an optical disk drive, or the like. In some embodiments, the memory 450 includes one or more storage devices physically located away from the processor 410.

The memory 450 includes a volatile memory or a non-volatile memory, or may include both a volatile memory and a non-volatile memory. The non-volatile memory may be a read-only memory (ROM). The volatile memory may be a random access memory (RAM). The memory 450 described in the embodiments of this application is intended to include any suitable type of memory.

In some embodiments, the memory 450 can store data to support various operations. Examples of the data include programs, modules, and data structures, or subsets or supersets thereof, as exemplarily described below.

An operating system 451 includes system programs for processing various basic system services and performing hardware-related tasks, such as a framework layer, a kernel library layer, and a drive layer, and is configured to implement various basic services and process hardware-based tasks.

A network communication module 452 is configured to reach another electronic device through one or more (wired or wireless) network interfaces 420. An example of the network interface 420 includes: Bluetooth, wireless fidelity (Wi-Fi), a universal serial bus (USB), or the like.

A presentation module 453 is configured to enable presentation of information through the one or more output devices 431 (such as display screens or speakers) associated with the user interface 430 (for example, a user interface configured to operate a peripheral device and display content and information).

An input processing module 454 is configured to detect one or more user inputs or interactions from one of the one or more input devices 432 and translate the detected inputs or interactions.

In some embodiments, the apparatus provided in the embodiments of this application may be implemented in a software manner. FIG. 2 shows a video frame data processing apparatus 455 stored in the memory 450, which may be software in the form of a program, a plug-in, and the like, and include the following software modules: a first obtaining module 4551, a first determining module 4552, a second determining module 4553, a first processing module 4554, and a motion application module 4555. These modules are logical, and therefore may be arbitrarily combined or further split depending on functions implemented. The functions of the modules are to be described below.

In some other embodiments, the apparatus provided in the embodiments of this application may be implemented in a hardware manner. In an example, the apparatus provided in the embodiments of this application may be a processor in the form of a hardware decoding processor, which is programmed to perform the video frame data processing method provided in the embodiments of this application. For example, the processor in the form of the hardware decoding processor may use one or more application-specific integrated circuits (ASICs), a DSP, a programmable logic device (PLD), a complex PLD (CPLD), a field-programmable gate array (FPGA), or another electronic element.

The video frame data processing method provided in the embodiments of this application is described with reference to exemplary applications and implementations of the server provided in the embodiments of this application.

To better understand the video frame data processing method provided in the embodiments of this application, AI, branches of AI, and application fields involved by the video frame data processing method provided in the embodiments of this application are described first.

(1) AI involves a theory, a method, a technology, and an application system that uses a digital computer or a machine controlled by the digital computer to simulate, extend, and expand human intelligence, perceive an environment, obtain knowledge, and use knowledge to obtain an optimal result. In other words, AI is a comprehensive technology in computer science and attempts to understand the essence of intelligence and produce a new intelligent machine that can react in a manner similar to human intelligence. AI is to study the design principles and implementation methods of various intelligent machines, to enable the machines to have the functions of perception, reasoning, and decision-making.

The AI technology is a comprehensive discipline, and relates to a wide range of fields including both hardware-level technologies and software-level technologies. Basic AI technologies generally include technologies such as a sensor, a dedicated AI chip, cloud computing, distributed storage, a big data processing technology, an operating/interaction system, and electromechanical integration. AI software technologies mainly include several major directions such as a CV technology, a speech processing technology, a natural language processing technology, and machine learning (ML)/deep learning (DL). The video frame data processing method provided in the embodiments of this application mainly relates to an ML direction, which is described below.

ML is a multi-field interdiscipline, and relates to a plurality of disciplines such as the probability theory, statistics, the approximation theory, convex analysis, and the algorithm complexity theory. ML specializes in studying how a computer simulates or implements a human learning behavior to obtain new knowledge or skills, and reorganize an existing knowledge structure, so as to keep improving its performance. ML is the core of AI, is a basic way to make the computer intelligent, and is applied to various fields of AI. ML and DL generally include technologies such as an artificial neural network, a belief network, reinforcement learning, transfer learning, and inductive learning.

With research and progress of the AI technology, the AI technology is researched and applied in a plurality of fields, such as common smart homes, smart wearable devices, virtual assistants, smart speakers, smart marketing, unmanned driving, automatic driving, unmanned aerial vehicles, robots, smart medical care, and smart customer services. It is believed that with development of technologies, the AI technology is to be applied in more fields and play an increasingly important value.

The following describes the video frame data processing method provided in the embodiments of this application. As described above, an electronic device for implementing the video frame data processing method in the embodiments of this application may be a server. Therefore, an execution body of each operation is not repeatedly described below.

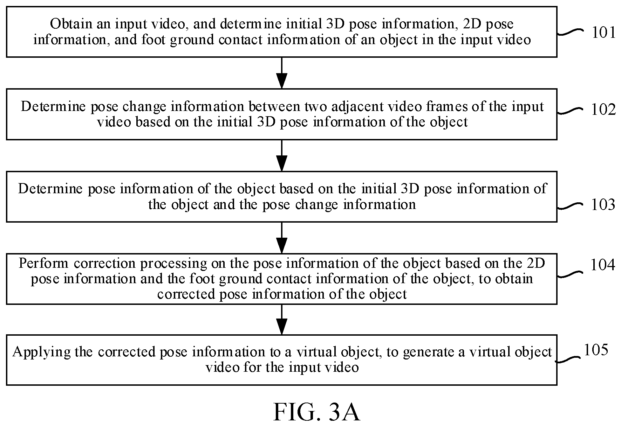

Referring to FIG. 3A, FIG. 3A is a schematic flowchart of a video frame data processing method according to an embodiment of this application. Description is to be provided with reference to operations shown in FIG. 3A.

Operation 101: Obtain an input video, and determine initial 3D pose information, 2D pose information, and foot ground contact information of an object in the input video.

The input video is a monocular video, that is, a video acquired by using a single image acquisition apparatus. The object in the input video performs a series of actions rather than being stationary. The object may be a natural person, a digital person, or a virtual character. The input video may be acquired by using an image acquisition apparatus in a terminal, or the input video may be downloaded from a network, or may be transmitted to a server from another device.

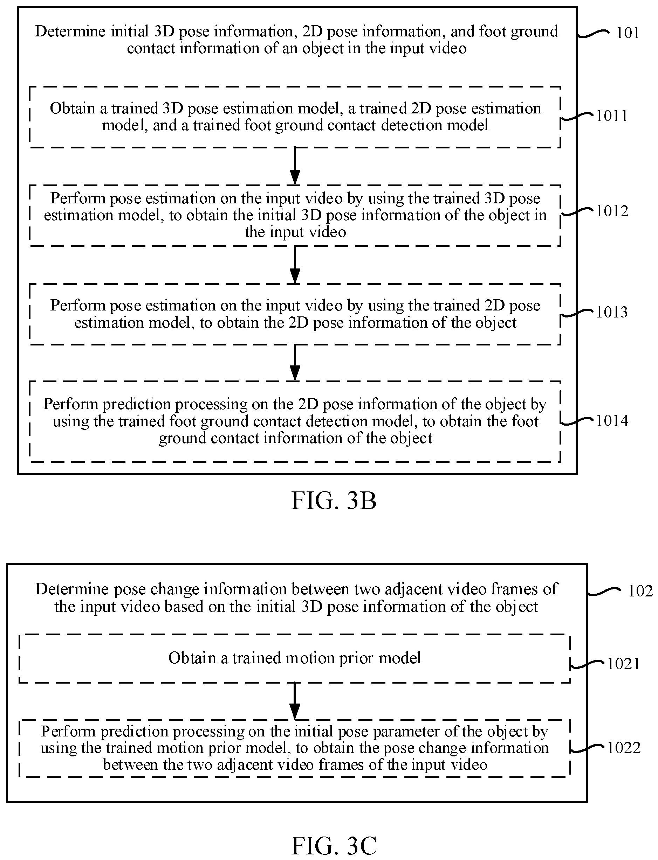

In some embodiments, referring to FIG. 3B, the "determining initial 3D pose information, 2D pose information, and foot ground contact information of an object in the input video" in operation 101 in FIG. 3A may be implemented through the following operation 1011 to operation 1014, which are described below with reference to FIG. 3B.

Operation 1011: Obtain a trained 3D pose estimation model, a trained 2D pose estimation model, and a trained foot ground contact detection model.

In some embodiments, a preset initial 3D pose estimation model, a preset initial 2D pose estimation model, and a preset initial foot ground contact detection model may be trained by using a first training video, to obtain a trained 3D pose estimation model, a trained 2D pose estimation model, and a trained foot ground contact detection model. During the training, first, the preset initial 3D pose estimation model, the preset initial 2D pose estimation model, and the preset initial foot ground contact detection model are obtained, and the first training video including a plurality of first training video frames is obtained. 3D pose information, 2D pose information, and foot ground contact information of an object in each first training video frame are separately obtained. The 3D pose information of the object in each first training video frame is determined as 3D annotation information of each first training video frame. The 2D pose information of the object in each first training video frame is determined as 2D annotation information of each first training video frame. The foot ground contact information of the object in each first training video frame is determined as ground contact annotation information of each first training video frame. Then, the initial 3D pose estimation model is trained by using each first training video frame and the 3D annotation information for each first training video frame, to obtain the trained 3D pose estimation model. The initial 2D pose estimation model is trained by using each first training video frame and the 2D annotation information for each first training video frame, to obtain the trained 2D pose estimation model. The initial foot ground contact detection model is trained by using each first training video frame and the ground contact annotation information for each first training video frame, to obtain the trained foot ground contact detection model.

Operation 1012: Perform pose estimation on the input video by using the trained 3D pose estimation model, to obtain the initial 3D pose information of the object in the input video.

In some embodiments, a constructed joint point tree and a total quantity N of video frames in the input video are first obtained. The joint point tree is a tree structure constructed according to a plurality of predefined joint points and a mutual influence relationship thereof. Then, pose estimation is performed on the object in an $i^{th}$ video frame in the N video frames by using the trained 3D pose estimation model, to obtain initial 3D pose information of the object in the $i^{th}$ video frame. The initial 3D pose information includes rotation information of each joint point of the object in the $i^{th}$ video frame relative to a parent node thereof, and orientation information, rotation information, and offset information of an entire skeleton, i = 1, 2, ..., or N.

Operation 1013: Perform pose estimation on the input video by using the trained 2D pose estimation model, to obtain the 2D pose information of the object.

In some embodiments, the $i^{th}$ video frame in the N video frames is input to the trained 2D pose estimation model, and pose estimation is performed on the object in the $i^{th}$ video frame, to obtain initial 2D pose information of the object in the $i^{th}$ video frame. The initial 2D pose information includes at least position coordinates of each joint point of the object in the $i^{th}$ video frame, i = 1, 2, ..., or N. It is assumed that the object has 24 predefined joint points, and position coordinates of a $j^{th}$ joint point may be represented as $(m_j, n_j)$. In this case, the initial 2D pose information of the object in the $i^{th}$ video frame may be represented as a 24*2-dimensional feature matrix.

In some embodiments, the 2D pose information of the object may further include preset confidence information of the joint point. The confidence information is configured for representing a degree of credibility of position coordinates of each joint point. Higher confidence information of a joint point represents a higher degree of credibility of position coordinates of the joint point.

Operation 1014: Perform prediction processing on the 2D pose information of the object by using the trained foot ground contact detection model, to obtain the foot ground contact information of the object.

The 2D pose information of the object in the $i^{th}$ video frame obtained in operation 1013 is input to the trained foot ground contact detection model, to determine whether a foot of the object in the $i^{th}$ video frame is in contact with a ground, to obtain foot ground contact information of the object in the $i^{th}$ video frame. The foot ground contact information may be represented as a 4-dimensional vector (rf, rb, lf, 1b), rf being configured for describing whether a right toe is in contact with the ground, rb being configured for describing whether a right heel is in contact with the ground, lf being configured for describing whether a left toe is in contact with the ground, and 1b being configured for describing whether a left heel is in contact with the ground. For example, when the right toe is in contact with the ground, a value of rf is 1. When the right toe is not in contact with the ground, the value of rf is 0. Assuming that the object has the right toe in contact with the ground, the right heel not in contact with the ground, the left toe in contact with the ground, and the left heel in contact with the ground, the foot ground contact information of the object is (1, 0, 1, 1).

Operation 102: Determine pose change information between two adjacent video frames of the input video based on the initial 3D pose information of the object.

In some embodiments, the initial 3D pose information may include an initial pose parameter and an initial shape parameter. Assuming that a current video frame is an $i^{th}$ video frame, during implementation of operation 102, prediction processing is performed on an initial pose parameter of the $i^{th}$ video frame based on a motion prior model, to obtain pose change information of the object from an $(i-1)^{th}$ video frame to the $i^{th}$ video frame. The pose change information of the object from the $(i-1)^{th}$ video frame to the $i^{th}$ video frame determined based on the motion prior model is an estimated value, and is different from pose change information of the object from the $(i-1)^{th}$ video frame to the $i^{th}$ video frame determined according to an initial pose parameter of the object in the $(i-1)^{th}$ video frame and the initial pose parameter of the object in the $i^{th}$ video frame. i = 1, 2, ..., or N-1, and N is a total quantity of video frames of the input video.

In some embodiments, referring to FIG. 3C, operation 102 in FIG. 3A may be implemented through the following operation 1021 and operation 1022. Description is provided below with reference to FIG. 3C.

Operation 1021: Obtain a trained motion prior model.

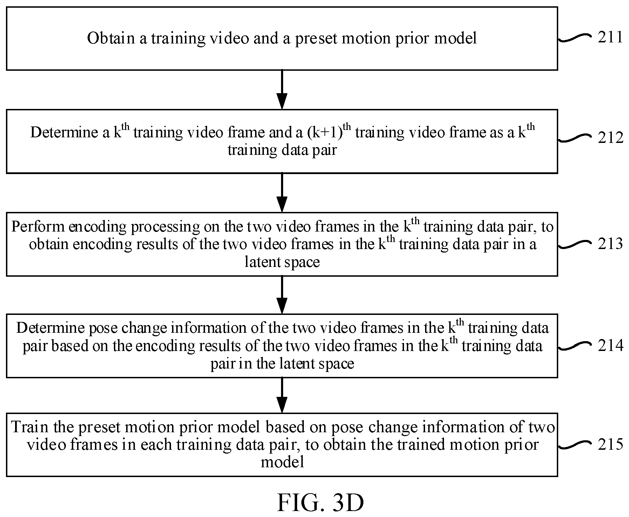

In some embodiments, referring to FIG. 3D, before operation 1021, the trained motion prior model may be obtained through the following operation 211 to operation 215. Description is provided below with reference to FIG. 3D.

Operation 211: Obtain a training video and a preset motion prior model.

The training video includes a plurality of training video frames, and the object in the training video performs a series of actions. The motion prior model may be a neural network model or a DL model. The motion prior model is configured for predicting pose change information of the object in two adjacent video frames.

Operation 212: Determine a $k^{th}$ training video frame and a $(k+1)^{th}$ training video frame as a $k^{th}$ training data pair.

In some embodiments, M training video frames included in the training video are first obtained, and then every two adjacent training video frames are used as a training data pair. That is, the M training video frames may form M-1 training data pairs, and the $k^{th}$ training data pair is formed by the $k^{th}$ training video frame and the $(k+1)^{th}$ training video frame. k = 1, 2, ..., or M-1, and M is a total quantity of video frames of the training video.

Operation 213: Perform encoding processing on the two training video frames in the $k^{th}$ training data pair, to obtain encoding results of the two training video frames in the $k^{th}$ training data pair in a latent space.

Herein, training pose parameters of the two training video frames in the $k^{th}$ training data pair are first obtained, and then, the training pose parameters of the two training video frames are encoded, to obtain encoding results of the two training video frames in the $k^{th}$ training data pair in the latent space. An encoder encoding the training pose parameters may be a variational autoencoder. The variational autoencoder is an encoder obtained through training by using a large data set of 3D human poses in advance. The 3D human poses included in the data set for training are poses that a human body can make. Encoding the training pose parameters of the $k^{th}$ training video frame and the $(k+1)^{th}$ training video frame in the $k^{th}$ training data pair in the latent space can prevent occurrence of a pose that the human body cannot make.

Operation 214: Determine predicted change information of the two training video frames in the $k^{th}$ training data pair based on the encoding results of the two training video frames in the $k^{th}$ training data pair in the latent space.

In some embodiments, encoding difference information between an encoding result of the $k^{th}$ training video frame in the latent space and an encoding result of the $(k+1)^{th}$ training video frame in the latent space is determined, and then the encoding difference information is decoded by using a decoder, to obtain the predicted change information of the two training video frames in the $k^{th}$ training data pair.

Operation 215: Adjust a parameter of the preset motion prior model based on predicted change information of two training video frames in each training data pair, to obtain the trained motion prior model.

In some embodiments, reference change information of the $k^{th}$ training video frame and the $(k+1)^{th}$ training video frame may be determined based on a training pose parameter of the $k^{th}$ training video frame and a training pose parameter of the $(k+1)^{th}$ training video frame. Then, a change difference between reference change information of each training data pair and the predicted change information is determined. The change difference is back-propagated to the motion prior model, and the parameter of the motion prior model is adjusted by using a gradient descent algorithm, to obtain the trained motion prior model.

In some embodiments, the motion prior model may include an encoder, a decoder, and a pose change determining module. A parameter of the pose change determining module may be determined according to a change average value and a change standard deviation that are determined according to a plurality of pieces of encoding difference information. The pose change determining module in the trained motion prior model may be a module that conforms to normal distribution.

According to the foregoing operation 211 to operation 215, first, a plurality of training data pairs are formed by using every two adjacent training video frames in a training video, and then two training video frames included in each training data pair are encoded by using a variational autoencoder, to ensure that a pose for an obtained encoding result is a pose that a human body can make. Then, predicted change information of the two training video frames in each training data pair is determined according to the encoding result, and the parameter of the motion prior model is adjusted based on a plurality of pieces of pose change information, to obtain the trained motion prior model.

Operation 1022: Perform prediction processing on the initial pose parameter of the object by using the trained motion prior model, to obtain the pose change information between the adjacent video frames.

In some embodiments, an initial pose parameter of the object in each video frame is encoded by using an encoder in the trained motion prior model, to obtain an encoding result for the object in each video frame. Then, prediction processing is performed on the encoding result by using the pose change determining module in the trained motion prior model, to obtain each prediction result. Finally, the prediction result is decoded by using the decoder in the trained motion prior model, to obtain the pose change information between the adjacent video frames.

Dimensions of the pose change information and the pose parameter are the same, for example, may be 24 * 3.

According to the foregoing operation 1021 and operation 1022, the pose change information of the object between the adjacent video frames is determined by using the trained motion prior model, so that continuity of action execution can be ensured.

Operation 103: Determine pose information of the object based on the initial 3D pose information of the object and the pose change information.

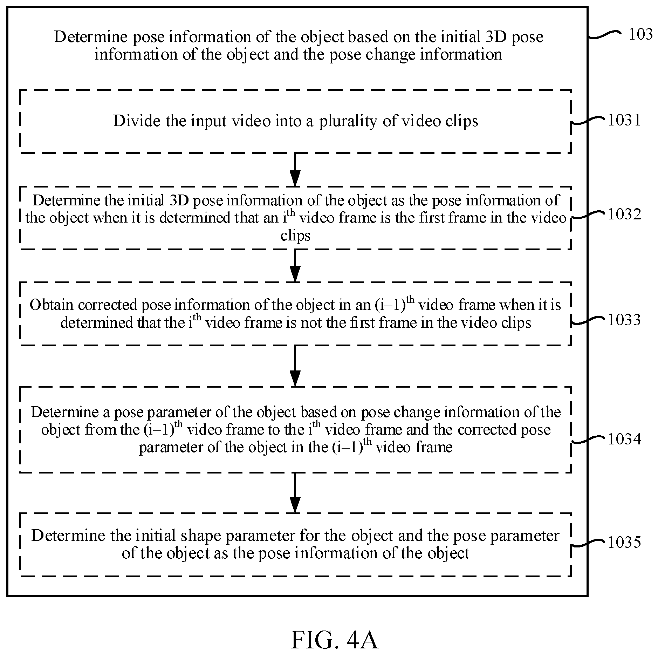

In some embodiments, referring to FIG. 4A, operation 103 in FIG. 3A may be implemented through the following operation 1031 to operation 1035. Description is provided below with reference to FIG. 4A.

Operation 1031: Divide the input video into a plurality of video clips.

In some embodiments, a total quantity of video frames of the input video may be first obtained, and then a quantity of video frames included in a video clip is determined based on the total quantity of video frames, so that the input video is divided into a plurality of video clips based on the quantity of video frames. The total quantity of video frames may be an integer multiple of the quantity of video frames, to ensure that the quantity of video frames in each video clip is the same. For example, the total quantity of video frames may be 500, and the quantity of video frames may be 50. In this case, the input video may be divided into 10 video clips, and each video clip includes 50 video frames.

In some embodiments, the input video may be directly divided into a plurality of video clips according to a preset quantity of video frames. For example, the input video may be divided according to the quantity of video frames of 45. In this way, only a quantity of video frames included in the last video clip may be less than 45, and the other video clips each include 45 video frames.

Operation 1032: Determine the initial 3D pose information of the object as the pose information of the object when it is determined that an $i^{th}$ video frame is the first frame in the video clips.

i = 1, 2, ..., or N, N is a total quantity of video frames in the input video, and the $i^{th}$ video frame is a current video frame in which the object is located.

In this embodiment of this application, initial 3D pose information of the first video frame of the video clip is used as a reference, and therefore, the initial 3D pose information of the object in the first video frame is determined as the pose information of the object.

Operation 1033: Obtain corrected pose information of the object in an $(i-1)^{th}$ video frame when it is determined that the $i^{th}$ video frame is not the first frame in the video clips.

The corrected pose information includes a corrected pose parameter and a corrected shape parameter.

Operation 1034: Determine a pose parameter of the object based on pose change information of the object from the $(i-1)^{th}$ video frame to the $i^{th}$ video frame and the corrected pose parameter for the object in the $(i-1)^{th}$ video frame.

In some embodiments, a sum of the pose change information of the object from the $(i-1)^{th}$ video frame to the $i^{th}$ video frame and the corrected pose parameter for the object in the $(i-1)^{th}$ video frame is determined as the pose parameter of the object.

Operation 1035: Determine the initial shape parameter for the object and the pose parameter of the object as the pose information of the object.

A height, weight, and thinness of a person usually do not change greatly due to execution of different actions. Therefore, in this embodiment of this application, the initial shape parameter for the object in the $i^{th}$ video frame and the pose parameter of the object in the $i^{th}$ video frame are determined as the pose information of the object in the $i^{th}$ video frame.

In the foregoing operation 1031 to operation 1035, the input video is first divided into a plurality of video clips, and the first video frame of each video clip is used as reference information, so that an error accumulation amount can be reduced. In addition, during determining of the pose information, the initial shape parameter of the object is determined as the shape parameter, so that a data processing amount can be reduced. Moreover, because the pose parameter of the object in a video frame other than the first frame in the video clip is obtained by summing up a corrected pose parameter of a previous frame and the pose change information, it may be understood as correcting only the pose change information during the correction. This can not only improve correction efficiency, but also ensure coherence and naturalness of actions.

Operation 104: Perform correction processing on the pose information of the object based on the 2D pose information and the foot ground contact information of the object, to obtain corrected pose information of the object.

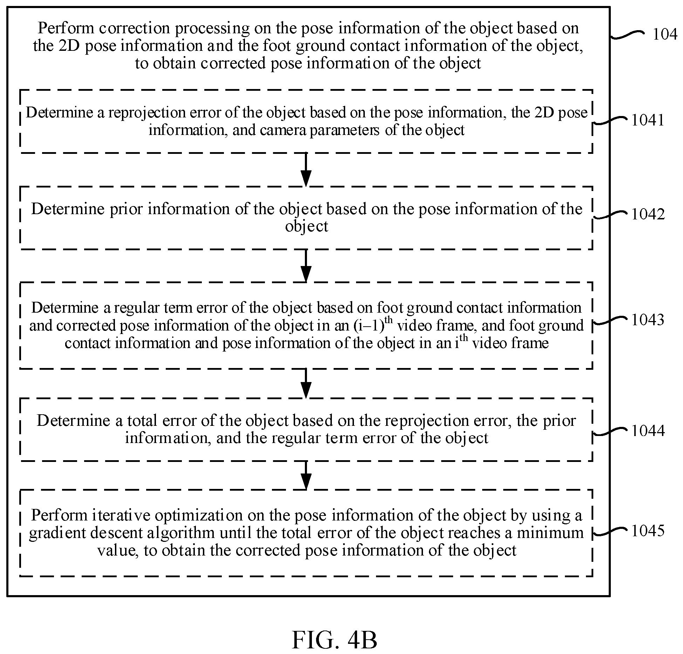

In some embodiments, referring to FIG. 4B, operation 104 in FIG. 3A may be implemented through the following operation 1041 to operation 1045. Description is provided below with reference to FIG. 4B.

Operation 1041: Determine a reprojection error of the $i^{th}$ video frame based on the pose information, the 2D pose information, and camera parameters of the object.

The pose information includes a pose parameter and a shape parameter. The 2D pose information includes reference coordinate information of each joint point of the object and a confidence of the joint point. The camera parameters include a camera extrinsic parameter and a camera intrinsic parameter.

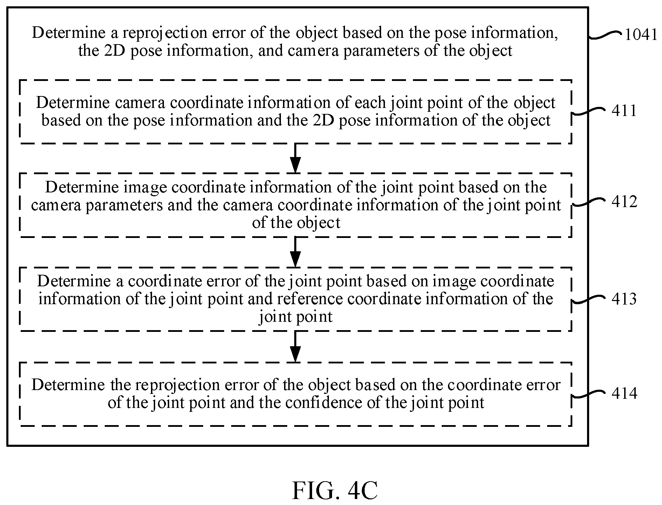

In some embodiments, referring to FIG. 4C, operation 1041 in FIG. 4B may be implemented through the following operation 411 to operation 414. Description is provided below with reference to FIG. 4C.

Operation 411: Determine camera coordinate information of each joint point of the object based on the pose information and the 2D pose information of the object.

In some embodiments, the camera coordinate information of the joint point of the object may be determined by using formula (1-1):

$$R_\theta(J(\beta)_i) = W\left(\overline{T} + B_s(\beta_i) + B_p(\theta_i), J(\beta)_i, \theta_i\right) \qquad (1\text{-}1),$$

where $\overline{T}$ is basic human pose mesh information, $\theta_i$ is the pose parameter of the object in the $i^{th}$ video frame, $\beta_i$ is the shape parameter of the object in the $i^{th}$ video frame, $B_s$ is a linear transformation matrix for the shape parameter, $B_p$ is a linear transformation matrix for the pose parameter, and $J(\beta)_i$ is the 2D pose information.

The camera coordinate information of the joint point obtained through formula (1-1) is 3D coordinates of the joint point in a camera coordinate system.

Operation 412: Determine image coordinate information of the joint point based on the camera parameters and the camera coordinate information of the joint point of the object.

In some embodiments, image coordinate information of each joint point may be determined through formula (1-2):

$$\begin{bmatrix} x_j \\ y_j \end{bmatrix} = \frac{f}{Z_j} \begin{bmatrix} X_j \\ Y_j \end{bmatrix} \qquad (1\text{-}2),$$

where $[x_j, y_j]$ is image coordinate information of a $j^{th}$ joint point, $[X_j, Y_j,$ and $Z_j]$ is camera coordinate information of the $j^{th}$ joint point, and f is a camera focal length.

Operation 413: Determine a coordinate error of the joint point based on image coordinate information of the joint point and reference coordinate information of the joint point.

In some embodiments, the reference coordinate information of each joint point may be obtained from the 2D pose information. A distance between the image coordinate information of each joint point and the reference coordinate information is determined, and the distance is determined as the coordinate error of the joint point.

Operation 414: Determine the reprojection error of the object based on the coordinate error of the joint point and the confidence of the joint point.

In some embodiments, the reprojection error of the $i^{th}$ video frame may be determined through formula (1-3):

$$E_J = \sum_j \omega_j \rho(\Delta C_j) \qquad (1\text{-}3),$$

where $\omega_j$ is a confidence for the $j^{th}$ joint point, $\Delta C_j$ is a coordinate error of the $j^{th}$ joint point, $\rho_\sigma(e) = \dfrac{e^2}{\sigma^2 + e^2}$ represents a Geman-McClure penalty function, and $\sigma$ is set to 100.

In the foregoing operation 411 to operation 414, during the determining of the reprojection error of the object in the $i^{th}$ video frame, a penalty function is introduced. The penalty function is mainly configured for penalizing an abnormal value, so that iterative optimization can be more stable.

Operation 1042: Determine prior information of the object based on the pose information of the object.

The prior information includes pose prior information and shape prior information. The pose information includes a pose parameter and a shape parameter.

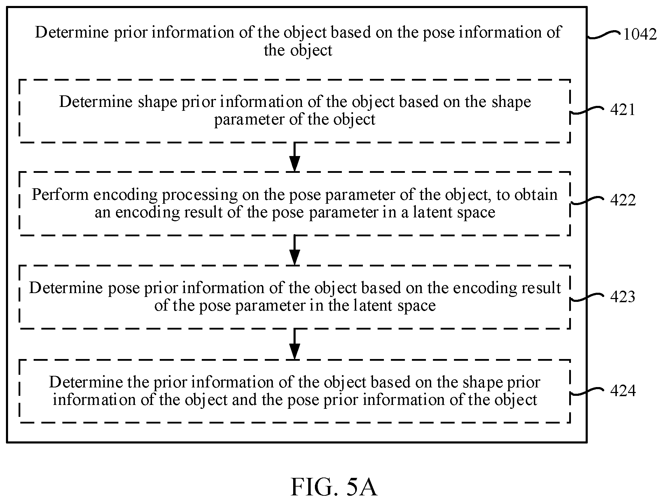

In some embodiments, referring to FIG. 5A, operation 1042 in FIG. 4B may be implemented through the following operation 421 to operation 424. Description is provided below with reference to FIG. 5A.

Operation 421: Determine the shape prior information of the object based on the shape parameter of the object.

In some embodiments, the shape parameter of the object is a shape parameter of the object in an $i^{th}$ video frame, and the shape prior information of the object is shape prior information of the object in the $i^{th}$ video frame. The shape parameter is represented by using a vector, which may be, for example, a vector of 1 * 10. In this operation, a modulus of the vector representing the shape parameter may be determined as the shape prior information.

Operation 422: Perform encoding processing on the pose parameter of the object, to obtain an encoding result of the pose parameter in a latent space.

In some embodiments, the pose parameter of the object in the $i^{th}$ video frame may be encoded by using a variational autoencoder, to obtain an encoding result of the pose parameter in the latent space. Encoding the pose parameter by using the variational autoencoder can ensure that a pose for the encoding result is an action that a human body can make.

Operation 423: Determine the pose prior information of the object based on the encoding result of the pose parameter in the latent space.

The encoding result may be represented by using a vector, which may be, for example, a 32-dimensional vector. In some embodiments, the pose prior information of the object is pose prior information of the object in the $i^{th}$ video frame, and a modulus of the vector representing the encoding result is determined as the pose prior information of the object.

Operation 424: Determine the prior information of the object based on the shape prior information of the object and the pose prior information of the object.

In some embodiments, a first weight for the shape prior information and a second weight for the pose prior information may be obtained, and then weighted summation is performed on the shape prior information and the pose prior information by using the first weight and the second weight, to obtain the prior information of the object.

In the foregoing operation 421 to operation 424, the shape prior information is determined by using the shape parameter of the object, the pose parameter is encoded, and the pose prior information is determined based on the encoding result. This can ensure that the pose prior information can represent an action that a human body can make, thereby restricting appropriateness of changing a pose between frames by using the shape prior and the pose prior.

Operation 1043: Determine a regular term error of the object based on foot ground contact information and corrected pose information of the object in an $(i-1)^{th}$ video frame, and foot ground contact information and pose information of the object in an $i^{th}$ video frame.

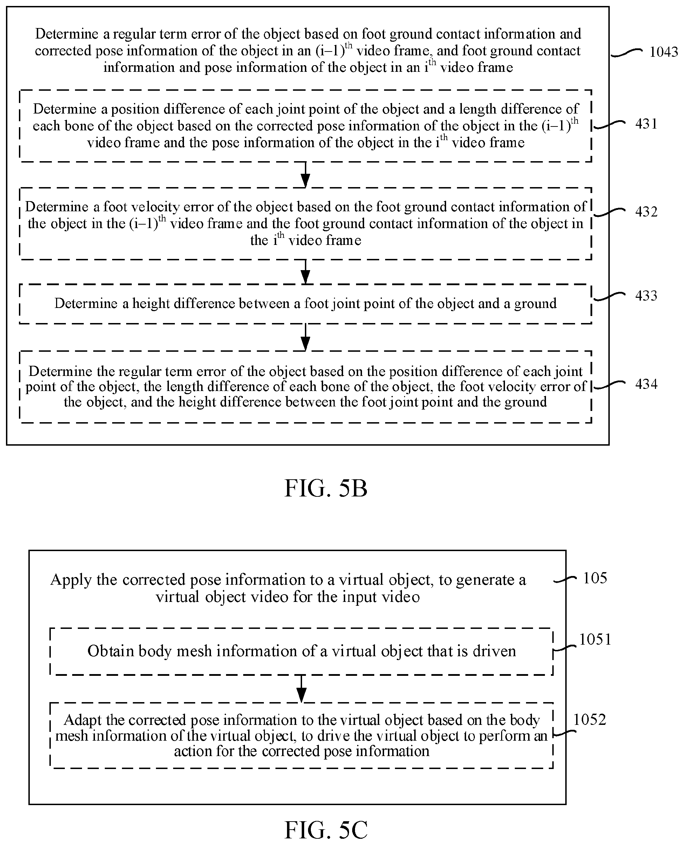

In some embodiments, referring to FIG. 5B, operation 1043 in FIG. 4B may be implemented through the following operation 431 to operation 434. Description is provided below with reference to FIG. 5B.

Operation 431: Determine a position difference of each joint point of the object and a length difference of each bone of the object based on the corrected pose information of the object in the $(i-1)^{th}$ video frame and the pose information of the object in the $i^{th}$ video frame.

In some embodiments, an $(i-1)^{th}$ position coordinate of each joint point is obtained from the corrected pose information of the object in the $(i-1)^{th}$ video frame, an $i^{th}$ position coordinate of each joint point is obtained from the pose information of the object in the $i^{th}$ video frame, and then the position difference of each joint point is determined based on the $(i-1)^{th}$ position coordinate and the $i^{th}$ position coordinate of each joint point. Then, an $(i-1)^{th}$ length value of each bone is determined based on $(i-1)^{th}$ position coordinates of two joint points on each bone, an $i^{th}$ length value of each bone is determined based on $i^{th}$ position coordinates of the two joint points on each bone, and a length difference of each bone is determined.

Operation 432: Determine a foot velocity error of the object based on the foot ground contact information of the object in the $(i-1)^{th}$ video frame and the foot ground contact information of the object in the $i^{th}$ video frame.

In some embodiments, first, a first velocity difference between the left foot tip of the object in the $(i-1)^{th}$ video frame and the left foot tip of the object in the $i^{th}$ video frame is determined, a second velocity difference between the left heel of the object in the $(i-1)^{th}$ video frame and the left heel of the object in the $i^{th}$ video frame is determined, a third velocity difference between the right foot tip of the object in the $(i-1)^{th}$ video frame and the right foot tip of the object in the $i^{th}$ video frame is determined, and a fourth velocity difference between the right heel of the object in the $(i-1)^{th}$ video frame and the right heel of the object in the $i^{th}$ video frame is determined. Then, the first velocity difference is multiplied by foot ground contact information of the left foot tip to obtain a first product, the second velocity difference is multiplied by foot ground contact information of the left heel to obtain a second product, the third velocity difference is multiplied by foot ground contact information of the right foot tip to obtain a third product, the fourth velocity difference is multiplied by foot ground contact information of the right heel to obtain a fourth product, and finally, a sum of the first product, the second product, the third product, and the fourth product is determined as the foot velocity error.

Operation 433: Determine a height difference between a foot joint point of the object and a ground.

In some embodiments, an $i^{th}$ position coordinate of the foot joint point of the object is determined, and then the height difference between the foot joint point and the ground is determined based on the $i^{th}$ position coordinate.

Operation 434: Determine the regular term error of the object based on the position difference of each joint point of the object, the length difference of each bone of the object, the foot velocity error of the object, and the height difference between the foot joint point and the ground.

In some embodiments, a third weight for the position difference of the joint points, a fourth weight for the length difference of the bones, a fifth weight for the foot velocity error, and a sixth weight for the height difference are obtained, and then weighted summation is performed on the position difference of the joint points, the length difference of the bones, the foot velocity error, and the height difference based on the third weight, the fourth weight, the fifth weight, and the sixth weight, to obtain the regular term error of the $i^{th}$ video frame.

In this embodiment of this application, weighting the differences or prior information by using different weights is to map the different differences or prior information to a uniform value range, so that constraint effects of different errors or prior information tend to be balanced.

In the foregoing operation 431 to operation 434, locations of joint points in adjacent frames are restricted to be relatively close by using the position difference of each joint point; lengths of bones in different frames are restricted to remain consistent by using the length difference of each bone; foots in two adjacent frames are restricted to be in contact with the ground by using a foot velocity, so that a foot movement velocity is 0; and it is restricted by using the height difference between the foot joint point and the ground that a height from the foot joint point to the ground is to be less than a threshold if the foot in a frame is in contact with the ground. For example, the threshold is set to be 2 cm. In this way, appropriateness of a human body pose can be ensured by using a regular term error.

Operation 1044: Determine a total error of the object based on the reprojection error value, the prior information, and the regular term error of the object.

In some embodiments, a sum of the reprojection error value, the prior information, and the regular term error is determined as the total error of the object in the $i^{th}$ video frame.

Operation 1045: Perform iterative optimization on the pose information of the object by using a gradient descent algorithm until the total error of the object reaches a minimum value, to obtain the corrected pose information of the object.

The gradient descent algorithm is a first-order optimization algorithm, and may also be referred to as a steepest descent method. To find a local minimum value of a function by using the gradient descent algorithm, iterative search needs to be performed on specified-step distance points in an opposite direction of a gradient (or an approximate gradient) for a current point on the function. When the total error of the object reaches the minimum value, the corrected pose information of the object is obtained.

Operation 105: Apply the corrected pose information to a virtual object, to generate a virtual object video for the input video.

For example, the corrected pose information may be applied to the virtual object through motion retargeting. Here, the motion retargeting refers to a process of directly applying a motion sequence and information thereof from a character A to another character B. Such process typically involves addressing differences in motion spaces between the two characters, such as skeletal structures and joint limitations. The goal of the motion retargeting is to make the motion appear natural on the new character, while preserving as much of the original motion's intent and style as possible.

In some embodiments, referring to FIG. 5C, operation 105 may be implemented through the following operation 1051 and operation 1052. Description is provided in detail below.

Operation 1051: Obtain body mesh information of a virtual object that is driven.

In some embodiments, the virtual object that is driven may be a virtual object in a game, a virtual object in a video, or a virtual object in VR. The body mesh information of the virtual object includes coordinate information of each mesh point in the virtual object.

Operation 1052: Adapt the corrected pose information to the virtual object based on the body mesh information of the virtual object, to drive the virtual object to perform an action for the corrected pose information.

In some embodiments, coordinate information of each joint point for the object may be determined based on the body mesh information of the virtual object that is driven, and then matching is performed on each joint point of the object with each joint point of the virtual object by using a motion retargeting system, to obtain matching information. In this way, the corrected pose information of the object is adapted, based on the matching information, to the virtual object, to drive the virtual object to perform an action for the corrected pose information.

According to the foregoing operation 1051 and operation 1052, the captured pose information can be adapted to any virtual object by using a motion retargeting technology, thereby improving utilization of the corrected pose information.

In the video frame data processing method provided in this embodiment of this application, after an input video is obtained, initial 3D pose information, 2D pose information, and foot ground contact information of an object in the input video are first determined, and then, pose change information between adjacent video frames is determined based on the initial 3D pose information of the object. The pose change information serves as a motion prior in combination with initial 3D pose information of each video frame, to determine pose information, and then correction processing is performed on the pose information of the object based on the 2D pose information and the foot ground contact information of the object, to obtain the corrected pose information of the object. Because the pose information of the video frame is determined with reference to the pose change information serving as the motion prior, during the correction of the pose information, the pose change information is actually corrected. This not only can improve correction efficiency, thus improving motion capture efficiency, but also can ensure motion continuity and appropriateness of a virtual object video obtained by applying the corrected pose information to a virtual object.

The following describes an exemplary application of the embodiments of this application in an actual application scenario.

The video frame data processing method provided in the embodiments of this application may be applied to application scenarios such as virtual digital person driving and video production.

Before the video frame data processing method provided in the embodiments of this application is described, an SMPL model and a function of the SMPL model involved in the embodiments of this application are described first.

The SMPL model may define a shape of a human body, for example, fatness, thinness, and height, and a pose of a human action. To define an action of a human body, each movable joint point of the human body needs to be parameterized. When a parameter of a joint point is changed, the pose of the human body changes accordingly.

The SMPL model is a statistical model, and is an average human body mesh obtained through calculation by using a large quantity of scanned human body shapes. This model describes the human body by using two types of statistical parameters:

I. Shape parameters: A group of shape parameters includes values of 10 dimensions. The shape parameter is configured for describing a shape of a person, and a value of each dimension may be interpreted as an index of the shape of the person, for example, height, fatness, or thinness.

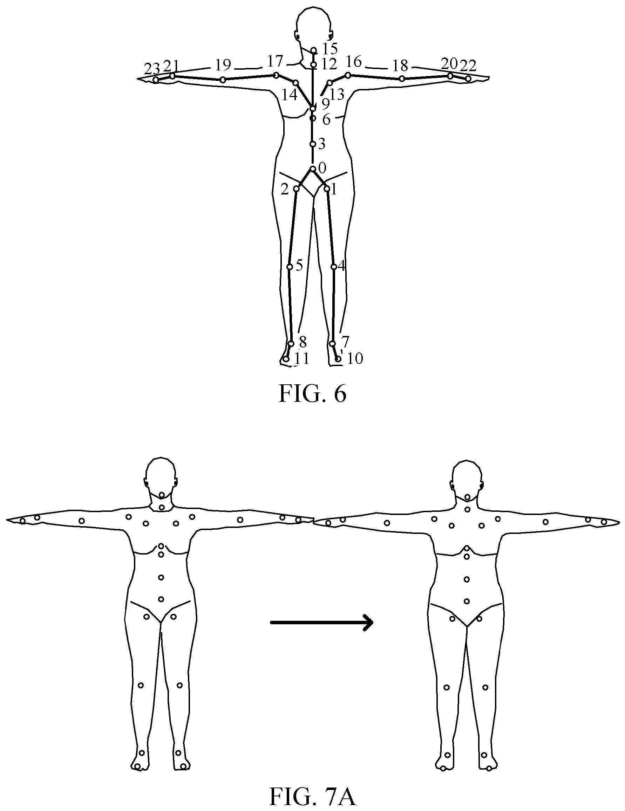

II. Pose parameters: A group of pose parameters has values in 24 x 3 dimensions. The pose parameter is configured for describing an action pose of a human body at a moment. In 24 $\times$ 3, 24 represents 24 defined human body joint points, and 3 refers to an axis-angle representation of a rotation angle of a node relative to a parent node thereof. For the 24 nodes, a joint point tree shown in FIG. 6 is defined in this embodiment of this application.

The SMPL model works in a three-stage process:

1. Shape blend shapes.

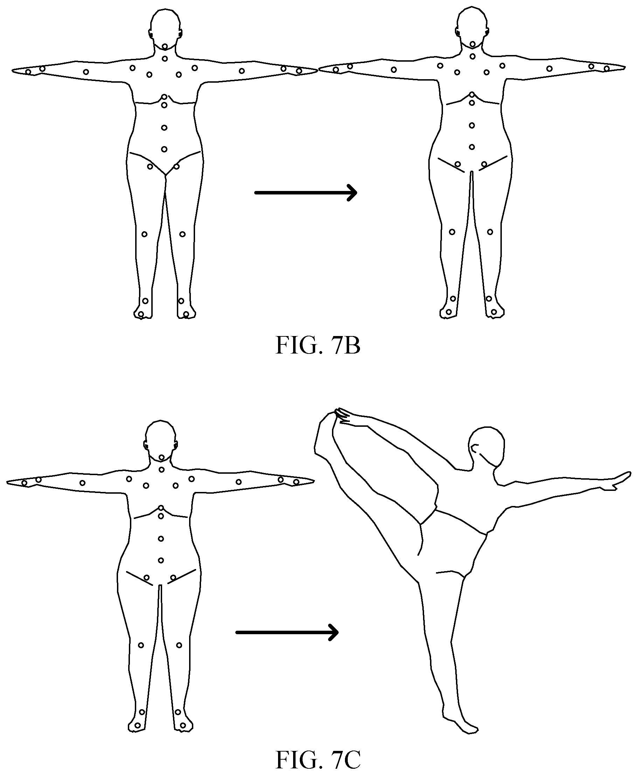

At this stage, a base template (or referred to as a mean template statistically) $\overline{T}$ shown in FIG. 7A is used as a basic pose of an entire human body, and the base template is obtained through statistics collection. An entire mesh is represented by using N = 6890 vertices. Each vertex has 3D space coordinates (x, y, z). Subsequently, an offset between a human body pose and the basic pose is described by using a shape parameter β, and the offset is superimposed on the basic pose to form a final and expected human body pose, as shown in FIG. 7B. This process is a linear process, where $B_s$ ($\vec{\beta}$) is a matrix multiplication process on a linear matrix of the shape parameter β. The pose of the human body mesh obtained herein is referred to as a rest pose (also referred to as a T-pose) because impact of the pose parameter is not considered.

2. Pose blend shapes.

After the shape of the human body mesh is specified according to the specified shape parameter β, a human body mesh with particular fatness, thinness, and height shown in FIG. 7B can be obtained. A pose parameter θ is superimposed on the human body mesh in the rest pose, to obtain a human body mesh having particular fatness, height, and poses shown in FIG. 7C. A specific action may affect a specific shape change of a part of a human body. For example, generally, when a human body is standing, it may be impossible to see a protruding abdominal region, but when the human body sits down, the abdominal region may be protruding. Therefore, the pose parameter θ also affects the shape of the mesh in the rest pose to some extent.

3. Skinning.

At the previous stages, only the mesh in the rest pose is calculated. When joints of a human body move, "skin" formed by vertices changes as the joints move, and this process is referred to as skinning. The skinning process may be considered as a weighted linear combination of skin nodes that is generated as the joints change. Briefly, this means that for a vertex closer to a specific joint, there is a stronger impact on it in changing with the joint, such as rotating/translating.

Based on the foregoing analysis, if a mesh model of a human body needs to be obtained, only a shape parameter β and a pose parameter θ of an SMPL parameterized human body model need to be obtained. Therefore, the entire algorithm process in this embodiment of this application is a problem of estimating the two parameters.

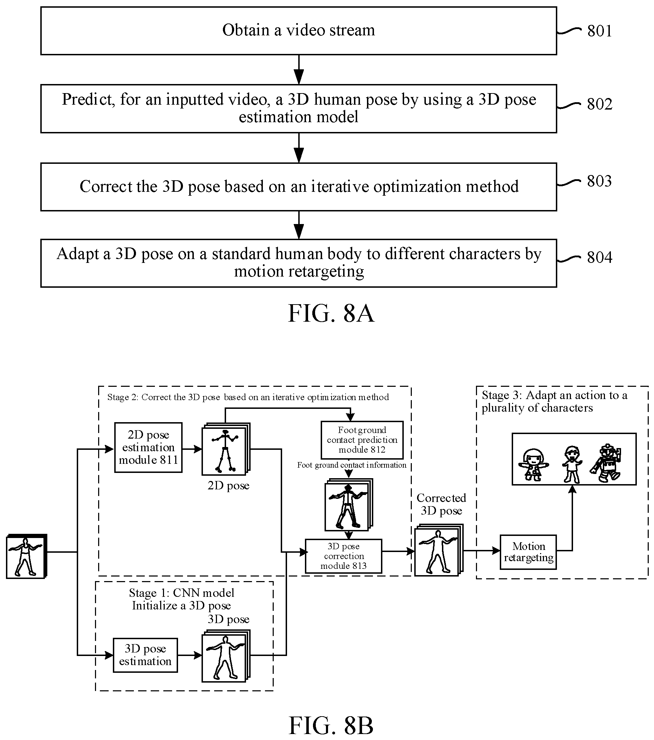

The video frame data processing method provided in the embodiments of this application may be implemented through operation 801 to operation 804 shown in FIG. 8A. An overall processing procedure of the video frame data processing method is shown in FIG. 8B, and is described below with reference to FIG. 8A and FIG. 8B.

Operation 801: Obtain a video stream.

The video stream may be an action clip recorded by using a common camera, or may be a related video including human body actions directly downloaded from a network.

Operation 802: Predict, for an inputted video, a 3D human pose by using a 3D pose estimation model.

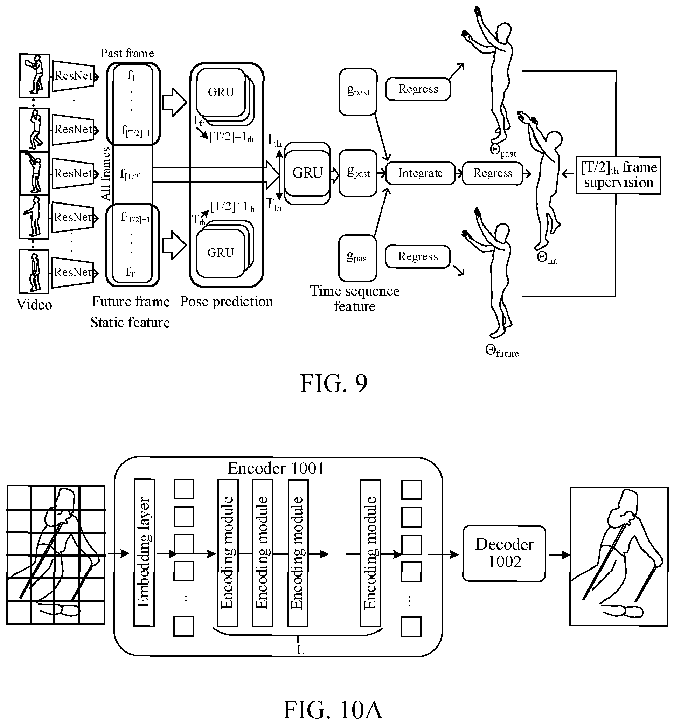

This operation corresponds to stage 1 in FIG. 8B. A schematic diagram of a network structure of the 3D pose estimation module at stage 1 is shown in FIG. 9. An implementation process of operation 802 is described below with reference to FIG. 9. First, a video, that is, a time sequence image, is inputted. Then, feature extraction is performed on each video frame in the video, to obtain a video feature for each video frame. Then, pose estimation is performed on the video feature by using a GPU, to obtain a time sequence feature, and regression and integration are performed on the obtained time sequence feature, to obtain a shape parameter and a pose parameter of an SMPL parameterized human body model for each frame of image, as initial values of a 3D pose correction module at stage 2 of FIG. 8B.

Operation 803: Correct the 3D pose based on an iterative optimization method.

In some embodiments, for the inputted video, a 2D human pose is first predicted by using a 2D pose estimation model, and then the 2D pose is inputted to a foot ground contact prediction model, to predict a human foot ground contact state. In the 3D pose correction module, the 3D human pose is further adjusted and optimized according to the 2D human pose and the foot ground contact state, to obtain a 3D human pose with higher precision.

This operation corresponds to stage 2 in FIG. 8B. Referring to FIG. 8B, stage 2 includes a 2D pose estimation module 811, a foot ground contact prediction module 812, and a 3D pose correction module 813. FIG. 10A is a schematic diagram of a network structure of a 2D pose estimation module according to an embodiment of this application. As shown in FIG. 10A, an input of the 2D pose estimation module is a 2D image. The 2D image is first divided into a plurality of image regions, then the plurality of image regions are encoded by using an encoder 1001, to obtain an image encoding result, and the encoding result is decoded by using a decoder 1002, to obtain 2D key points for a human body in the image. The 2D key points obtained in this operation are used as a supervision signal for iterative optimization in the 3D pose correction module.

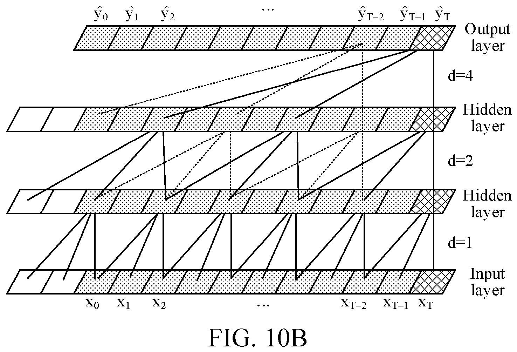

FIG. 10B is a schematic diagram of a network structure of a foot ground contact prediction module according to an embodiment of this application. As shown in FIG. 10B, the foot ground contact prediction module includes a plurality of hidden layers (only two hidden layers are exemplarily shown in FIG. 10B). Prediction processing is performed on an inputted 2D key point sequence by using the plurality of hidden layers, and whether left and right feet in each frame of image are in contact with a ground is outputted as a determining signal of a regular term during iterative optimization in a 3D pose correction module.

This operation does not correct an initial 3D pose obtained in operation 802. Instead, a change amount from a pose of a current frame to a pose of a next frame needs to be predicted by using a motion prior model based on the 3D pose of each video frame obtained in operation 802, and then a to-be-corrected pose of a next frame is determined based on a sum of a corrected pose of the current frame and the change amount, so that the to-be-corrected pose of the next frame is further adjusted and optimized according to the 2D human pose and the foot ground contact state by using the 3D pose correction module, to obtain a pose with higher precision.

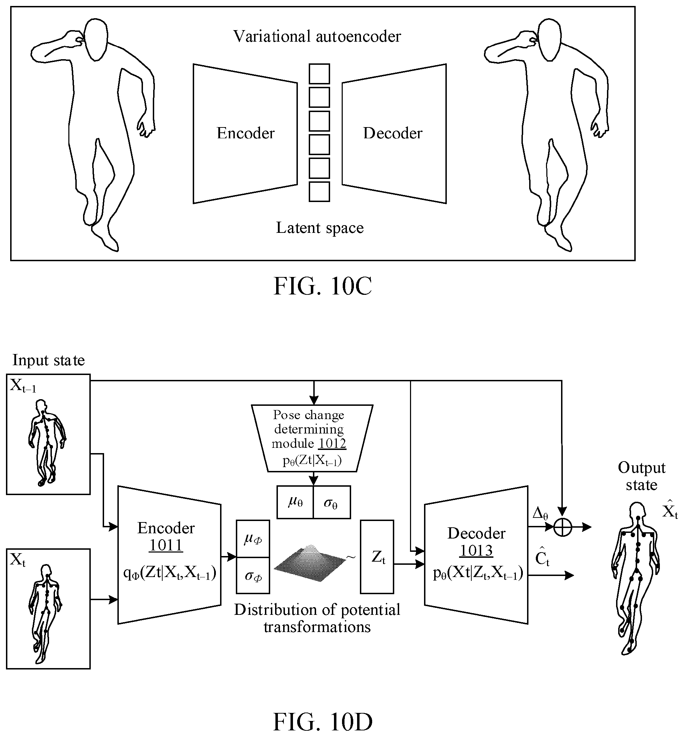

FIG. 10D is a schematic diagram of a network structure of a motion prior model. The motion prior model is a variational autoencoder, obtained through training based on a large data set of 3D human poses. The model predicts a change amount from a pose of a current frame to a pose of a next frame according to a human pose of the current frame, and models appropriateness of a change of the human pose between frames through learning of a large amount of data. As shown in FIG. 10D, the motion prior model includes an encoder 1011, a pose change determining module 1012, and a decoder 1013. First, the encoder 1011 in the motion prior model encodes initial pose parameters of an object in two adjacent video frames, to obtain encoding results. Then, the pose change determining module 1012 in the motion prior model performs prediction processing on the encoding results, to obtain prediction results. Finally, the decoder 1013 in the motion prior model decodes the prediction results, to obtain pose change information between the adjacent video frames.

An application manner may be as follows: A to-be-optimized video is divided into N clips, and each clip has 45 frames. A group of pose parameters is optimized for each previous frame. After a motion prior is applied, a group of pose parameters is optimized for only the first frame of each clip, and for each subsequent frame, only a change amount from a previous frame to a next frame needs to be optimized.

The 3D pose correction module is a core of an algorithm in this embodiment of this application. A total objective function for iterative optimization is defined as $E_J(\beta,\theta,K;J_{est}) + E_{prior} + E_{reg}$, where $\beta$ represents a human body shape parameter, $\theta$ represents a human body pose parameter, and K represents a camera parameter; and $J_{est}$ represents coordinates of 2D key points predicted by the model. A role of the 3D pose correction module in the algorithm pipeline is as follows: With a 3D human pose predicted at stage 1 as an initial value, and a 2D key point predicted at stage 2 as a supervision signal, iterative optimization is performed on the 3D human pose by using a gradient descent algorithm, to minimize the total objective function.

Each part of the objective function is described as follows:

(1) A reprojection error may be expressed as formula (2-1):

$$E_J\left(\beta,\theta,K;J_{est}\right)=\sum_i \omega_i \rho(\Pi_K(R_\theta(J(\beta)_i)-J_{est,i}) \tag{2-1},$$

where $\omega_i$ represents a confidence of the 2D key point predicted by a 2D key point model, and is used as a weighting coefficient;

$J_{est,i}$ represents coordinates of an $i^{th}$ 2D key point on the image;

$R_\theta(J(\beta)_i$ represents coordinates, in a camera coordinate system, of an $i^{th}$ joint point obtained after the shape parameter $\beta$ and the pose parameter $\theta$ are inputted into an SMPL parameterized human body model;

$\Pi_K$ represents projecting point coordinates [X, Y, Z] in the camera coordinate system to point coordinates [x, y] in an image coordinate system, and a specific calculation formula is $\begin{bmatrix} x \\ y \end{bmatrix}=\dfrac{f}{Z}\begin{bmatrix} X \\ Y \end{bmatrix}$ , where f represents a camera focal length, and is set to a default value 1060 in the algorithm; and

$\rho_\sigma(e)=\dfrac{e^2}{\sigma^2+e^2}$ represents a Geman-McClure penalty function, and $\sigma$ is set to 100, and is mainly configured for penalizing an abnormal value in the objective function to make the iterative optimization more stable.

(2) A prior term may be expressed as formula (2-2):

$$E_{prior} = \lambda_\beta E_{shape} + \lambda_\theta E_{pose} \tag{2-2}.$$

a. A shape prior may be expressed as formula (2-3):

$$E_{shape} = \left\|\beta\right\|_2 \tag{2-3},$$

where $\beta$ represents a shape parameter in the SMPL parameterized human body model, and may be a 10-dimensional vector; and a physical meaning of the shape prior term is to constrain a shape parameter of a human body not to deviate excessively greatly from an average human body.
b. A pose prior may be expressed as formula (2-4):

$$E_{pose} = \left\|\theta_{latent}\right\|_2 \tag{2-4},$$

where $\theta_{latent}$ represents encoding of the pose parameter of the SMPL parameterized human body model in a latent space, and may be a 32-dimensional vector. A physical meaning of the pose prior term is to constrain a pose parameter of a human body not to deviate excessively greatly from a normal pose.
The encoding of $\theta_{latent}$ uses a variational autoencoder shown in FIG. 10C, and the motion prior variational autoencoder is obtained through training based on a large data set of 3D human poses. Therefore, common human poses are encoded in the latent space. This can prevent occurrence of some poses that the human body cannot make.

(3) A regular term may be expressed as formula (2-5):

$$E_{reg} = \lambda_s E_{smooth} + \lambda_b E_{bone\_length} + \lambda_{cv} E_{contact\_vel} + \lambda_{ch} E_{contact\_height} \tag{2-5},$$

where $E_{smooth}$ represents that 3D joint points need to be relatively close in adjacent frames;
$E_{bone\_length}$ represents that lengths of bones in different frames need to remain consistent;
$E_{contact\_vel}$ represents that a foot velocity error is 0 if a foot is in contact with a ground in two adjacent frames; and
$E_{contact\_height}$ represents that a height from a foot joint point to the ground is less than a threshold if the foot in a frame is in contact with the ground, the threshold being set to 2 centimeters in the algorithm.

Operation 804: Adapt a 3D pose on a standard human body to different characters by motion retargeting.

This operation corresponds to stage 3 in FIG. 8B, and is a motion retargeting process. A function of this operation in the algorithm pipeline is: migrating an action on the SMPL parameterized human body model obtained through calculation by the algorithm to another target character.

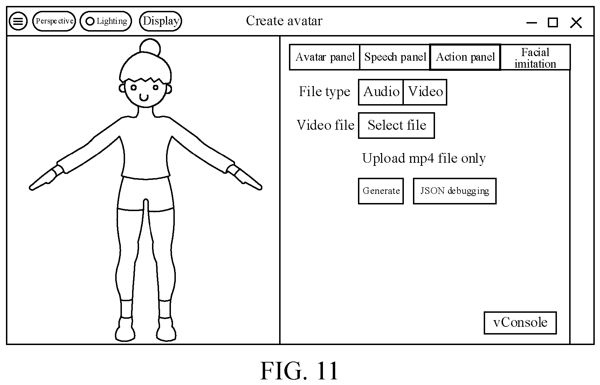

FIG. 11 is a schematic diagram of an application interface of a video frame data processing method according to an embodiment of this application in an unreal engine. The unreal engine may be an unreal engine 5 (UE5). As shown in FIG. 11, in the application interface, "Action panel" is selected, "Video" is selected for the file type, and "Select file" is clicked/tapped, to upload a video in a format (for example, an mp4 format) satisfying a requirement. Then, a "Generate" key is clicked/tapped, to wait for an algorithm to run to complete for obtaining an action of a human body. Finally, an effect of the obtained action of the human body is viewed on the displayed character.

According to the video frame data processing method provided in this embodiment of this application, an optimized overall solution can ensure motion accuracy obtained by video motion capture, and in scenes such as dance and walking, a character motion may be almost consistent with that in a video. Through introduction of a motion prior to a 3D pose correction module, appropriateness of human body movement in a walking scene can be ensured, thereby greatly improving an effect of video dynamic capture.

In the embodiments of this application, relevant data such as video frame information is involved. When the embodiments of this application are applied to a specific product or technology, user permission or consent needs to be obtained, and collection, use, and processing of the relevant data need to comply with relevant laws, regulations, and standards of relevant countries and regions.

The following continues to describe an exemplary structure in which the video frame data processing apparatus 455 provided in the embodiments of this application is implemented as software modules. In some embodiments, as shown in FIG. 2, the software modules in the video frame data processing apparatus 455 stored in the memory 440 may include: the first obtaining module 4551, configured to obtain an input video, and determine initial 3D pose information, 2D pose information, and foot ground contact information of an object in the input video; the first determining module 4552, configured to determine pose change information between two adjacent video frames of the input video based on the initial 3D pose information of the object; the second determining module 4553, configured to determine pose information of the object based on the initial 3D pose information of the object and the pose change information; the first processing module 4554, configured to perform correction processing on the pose information of the object based on the 2D pose information and the foot ground contact information of the object, to obtain corrected pose information of the object; and the motion application module 4555, configured to apply the corrected pose information to a virtual object, to generate a virtual object video for the input video.

In some embodiments, the initial 3D pose information includes an initial pose parameter and an initial shape parameter, and the first determining module 4551 is further configured to: obtain a trained motion prior model; and perform prediction processing on the initial pose parameter of the object by using the trained motion prior model, to obtain the pose change information between the adjacent video frames.

In some embodiments, the first determining module 4551 is further configured to: divide the input video into a plurality of video clips; determine the initial 3D pose information of the object as the pose information of the object when it is determined that an $i^{th}$ video frame is the first frame in the video clips, i = 1, 2, ..., or N, N being a total quantity of video frames in the input video, and the $i^{th}$ video frame being a current video frame in which the object is located; obtain corrected pose information of the object in an $(i-1)^{th}$ video frame when it is determined that the $i^{th}$ video frame is not the first frame in the video clips, the corrected pose information including a corrected pose parameter and a corrected shape parameter; determine a pose parameter of the object based on pose change information of the object from the $(i-1)^{th}$ video frame to the $i^{th}$ video frame and the corrected pose parameter of the object in the $(i-1)^{th}$ video frame; and determine the initial shape parameter for the object and the pose parameter of the object as the pose information of the object.

In some embodiments, the first processing module 4554 is further configured to: determine a reprojection error of the object based on the pose information, the 2D pose information, and camera parameters of the object; determine prior information of the object based on the pose information of the object, the prior information including pose prior information and shape prior information; determine a regular term error of the object based on foot ground contact information and corrected pose information of the object in the $(i-1)^{th}$ video frame, and foot ground contact information and pose information of the object in the $i^{th}$ video frame; determine a total error of the object based on the reprojection error, the prior information, and the regular term error of the object; and perform iterative optimization on the pose information of the object by using a gradient descent algorithm until the total error of the object reaches a minimum value, to obtain the corrected pose information of the object.

In some embodiments, the 2D pose information includes reference coordinate information of each joint point of the object and a confidence of the joint point, and the first processing module 4554 is further configured to: determine camera coordinate information of the joint point of the object based on the pose information and the 2D pose information of the object; determine image coordinate information of the joint point based on the camera parameters and the camera coordinate information of the joint point of the object; determine a coordinate error of the joint point based on the image coordinate information of the joint point and the reference coordinate information of the joint point; and determine the reprojection error of the object based on the coordinate error of the joint point and the confidence of the joint point.

In some embodiments, the pose information includes a pose parameter and a shape parameter, and the first processing module 4554 is further configured to: determine the shape prior information of the object based on the shape parameter of the object; perform encoding processing on the pose parameter of the object, to obtain an encoding result of the pose parameter in a latent space; determine the pose prior information of the object based on the encoding result of the pose parameter in the latent space; and determine the prior information of the object based on the shape prior information of the object and the pose prior information of the object.

In some embodiments, the first processing module 4554 is further configured to: determine a position difference of each joint point of the object and a length difference of each bone of the object based on the corrected pose information of the object in the (i-1)$^{th}$ video frame and the pose information of the object in the i$^{th}$ video frame; determine a foot velocity error of the object based on the foot ground contact information of the object in the (i-1)$^{th}$ video frame and the foot ground contact information of the object in the i$^{th}$ video frame; determine a height difference between a foot joint point of the object and a ground; and determine the regular term error of the object based on the position difference of each joint point of the object, the length difference of each bone of the object, the foot velocity error of the object, and the height difference between the foot joint point and the ground.

In some embodiments, the video frame data processing apparatus 455 further includes: a second obtaining module, configured to obtain a training video and a preset motion prior model, the training video including a plurality of training video frames; a third determining module, configured to determine a k$^{th}$ training video frame and a (k+1)$^{th}$ training video frame as a k$^{th}$ training data pair, k = 1, 2, ..., or M-1, and M being a total quantity of video frames of the training video; a second processing module, configured to perform encoding processing on the two training video frames in the k$^{th}$ training data pair, to obtain encoding results of the two training video frames in the k$^{th}$ training data pair in the latent space; a fourth determining module, configured to determine predicted change information of the two training video frames in the k$^{th}$ training data pair based on the encoding results of the two training video frames in the k$^{th}$ training data pair in the latent space; and a training module, configured to train the preset motion prior model based on predicted change information of two training video frames in each training data pair, to obtain a trained motion prior model.

In some embodiments, the first obtaining module 4551 is further configured to: obtain a trained 3D pose estimation model, a trained 2D pose estimation model, and a trained foot ground contact detection model; perform pose estimation on the input video by using the trained 3D pose estimation model, to obtain the initial 3D pose information of the object in the input video; perform pose estimation on the input video by using the trained 2D pose estimation model, to obtain the 2D pose information of the object; and perform prediction processing on the 2D pose information of the object by using the trained foot ground contact detection model, to obtain the foot ground contact information of the object.

In some embodiments, the motion application module 4555 is further configured to: obtain body mesh information of a virtual object that is driven; and adapt the corrected pose information to the virtual object based on the body mesh information of the virtual object, to drive the virtual object to perform an action for the corrected pose information.

The foregoing descriptions of the embodiment of the video frame data processing apparatus are similar to the foregoing descriptions of the method, and the apparatus embodiment has beneficial effects similar to those of the method embodiment. For technical details not disclosed in the embodiment of the video frame data processing apparatus of this application, a person skilled in the art may refer to the descriptions of the method embodiment of this application for understanding.

An embodiment of this application provides a computer program product, including a computer program or an computer-executable instruction, the computer program or the computer-executable instruction being stored in a computer-readable storage medium. A processor of an electronic device reads the computer-executable instruction from the computer-readable storage medium, and the processor executes the computer-executable instruction, to cause the electronic device to perform the video frame data processing method according to the embodiments of this application.

An embodiment of this application provides a computer-readable storage medium storing an computer-executable instruction, the computer-executable instruction, when executed by a processor, causing the processor to perform the video frame data processing method according to the embodiments of this application, for example, the video frame data processing method shown in FIG. 3A or FIG. 5C.

In some embodiments, the computer-readable storage medium may be a memory such as a FRAM, a ROM, a PROM, an EPROM, an EEPROM, a flash memory, a magnetic surface memory, a compact disc, or a CD-ROM; or may be various devices including one of or any combination of the foregoing memories.

In some embodiments, the computer-executable instruction may be written in the form of a program, software, a software module, a script, or code and according to a programming language (including a compiler or interpreter language or a declarative or procedural language) in any form, and may be deployed in any form, including being deployed as an independent program or deployed as a module, a component, a subroutine, or another unit suitable for use in a computing environment.

In an example, the computer-executable instruction may, but does not necessarily, correspond to a file in a file system, and may be stored in a part of a file that holds another program or other data, for example, stored in one or more scripts in a hypertext markup language (HTML) document, in a single file specifically used for a program in discussion, or in a plurality of collaborative files (for example, files storing one or more modules, subprograms, or code sections).

As an example, the executable instruction may be deployed to be executed on a single electronic device, or on a plurality of electronic devices located in a same location, or on a plurality of electronic devices distributed in a plurality of locations and interconnected through a communication network.

The foregoing descriptions are merely embodiments of this application and are not intended to limit the protection scope of this application. Any modification, equivalent replacement, or improvement made within the spirit and scope of this application shall fall within the protection scope of this application.

**Claims**

1. A video frame data processing method, comprising:

   obtaining an input video, and determining initial three-dimensional (3D) pose information, two-dimensional (2D) pose information, and foot ground contact information of an object in the input video;
   determining pose change information between two adjacent video frames of the input video based on the initial 3D pose information of the object;
   determining pose information of the object based on the initial 3D pose information of the object and the pose change information;
   performing correction processing on the pose information of the object based on the 2D pose information and the foot ground contact information of the object, to obtain corrected pose information of the object; and
   applying the corrected pose information to a virtual object, to generate a virtual object video for the input video.

2. The method according to claim 1, wherein the initial 3D pose information comprises an initial pose parameter and an initial shape parameter, and the determining pose change information between two adjacent video frames of the input video based on the initial 3D pose information of the object comprises:

   obtaining a trained motion prior model; and
   performing prediction processing on the initial pose parameter of the object by using the trained motion prior model, to obtain the pose change information between the two adjacent video frames of the input video.

3. The method according to claim 2, wherein the determining pose information of the object based on the initial 3D pose information of the object and the pose change information comprises:

   dividing the input video into a plurality of video clips;
   determining the initial 3D pose information of the object as the pose information of the object when it is determined that an $i^{th}$ video frame is the first frame in the video clips, i = 1, 2, ..., or N, N being a total quantity of video frames in the input video, and the $i^{th}$ video frame being a current video frame in which the object is located;
   obtaining corrected pose information of the object in an $(i-1)^{th}$ video frame when it is determined that the $i^{th}$ video frame is not the first frame in the video clips, the corrected pose information comprising a corrected pose parameter and a corrected shape parameter;
   determining a pose parameter of the object based on pose change information of the object from the $(i-1)^{th}$ video frame to the $i^{th}$ video frame and the corrected pose parameter of the object in the $(i-1)^{th}$ video frame; and
   determining the initial shape parameter for the object and the pose parameter of the object as the pose information of the object.

4. The method according to claim 1, wherein the performing correction processing on the pose information of the object based on the 2D pose information and the foot ground contact information of the object, to obtain corrected pose information of the object comprises:

   determining a reprojection error of the object based on the pose information, the 2D pose information, and camera parameters of the object;

determining prior information of the object based on the pose information of the object;

determining a regular term error of the object based on foot ground contact information and corrected pose information of the object in an (i-1)<sup>th</sup> video frame, and foot ground contact information and pose information of the object in an i<sup>th</sup> video frame;

determining a total error of the object based on the reprojection error, the prior information, and the regular term error of the object; and

performing iterative optimization on the pose information of the object by using a gradient descent algorithm until the total error of the object reaches a minimum value, to obtain the corrected pose information of the object.

5. The method according to claim 4, wherein the 2D pose information comprises reference coordinate information of each joint point of the object and a confidence of the joint point, and the determining a reprojection error of the object based on the pose information, the 2D pose information, and camera parameters of the object comprises:

determining camera coordinate information of the joint point of the object based on the pose information and the 2D pose information of the object;

determining image coordinate information of the joint point based on the camera parameters and the camera coordinate information of the joint point of the object;

determining a coordinate error of the joint point based on the image coordinate information of the joint point and the reference coordinate information of the joint point; and

determining the reprojection error of the object based on the coordinate error of the joint point and the confidence of the joint point.

6. The method according to claim 4, wherein the pose information comprises a pose parameter and a shape parameter, the prior information comprises pose prior information and shape prior information, and the determining prior information of the object based on the pose information of the object comprises:

determining the shape prior information of the object based on the shape parameter of the object;

performing encoding processing on the pose parameter of the object, to obtain an encoding result of the pose parameter in a latent space;

determining the pose prior information of the object based on the encoding result of the pose parameter in the latent space; and

determining the prior information of the object based on the shape prior information of the object and the pose prior information of the object.

7. The method according to claim 4, wherein the determining a regular term error of the object based on foot ground contact information and corrected pose information of the object in an (i-1)<sup>th</sup> video frame, and foot ground contact information and pose information of the object in an i<sup>th</sup> video frame comprises:

determining a position difference of each joint point of the object and a length difference of each bone of the object based on the corrected pose information of the object in the (i-1)<sup>th</sup> video frame and the pose information of the object in the i<sup>th</sup> video frame;

determining a foot velocity error of the object based on the foot ground contact information of the object in the (i-1)<sup>th</sup> video frame and the foot ground contact information of the object in the i<sup>th</sup> video frame;

determining a height difference between a foot joint point of the object and a ground; and

determining the regular term error of the object based on the position difference of each joint point of the object, the length difference of each bone of the object, the foot velocity error of the object, and the height difference between the foot joint point and the ground.

8. The method according to any one of claims 2 to 7, further comprising:

obtaining a training video and a preset motion prior model, the training video comprising a plurality of training video frames;

determining a k<sup>th</sup> training video frame and a (k+1)<sup>th</sup> training video frame as a k<sup>th</sup> training data pair, k = 1, 2, ..., or M-1, and M being a total quantity of video frames of the training video;

performing encoding processing on the two training video frames in the k<sup>th</sup> training data pair, to obtain encoding results of the two training video frames in the k<sup>th</sup> training data pair in the latent space;

determining predicted change information of the two training video frames in the k<sup>th</sup> training data pair based on the encoding results of the two training video frames in the k<sup>th</sup> training data pair in the latent space; and

adjusting a parameter of the preset motion prior model based on pose change information of two video frames in each training data pair, to obtain the trained motion prior model.

9. The method according to any one of claims 1 to 7, wherein the determining initial 3D pose information, 2D pose information, and foot ground contact information of an object in the input video comprises:

obtaining a trained 3D pose estimation model, a trained 2D pose estimation model, and a trained foot ground contact detection model;
performing pose estimation on the input video by using the trained 3D pose estimation model, to obtain the initial 3D pose information of the object in the input video;
performing pose estimation on the input video by using the trained 2D pose estimation model, to obtain the 2D pose information of the object; and
performing prediction processing on the 2D pose information of the object by using the trained foot ground contact detection model, to obtain the foot ground contact information of the object.

10. The method according to any one of claims 1 to 7, wherein the applying the corrected pose information to a virtual object, to generate a virtual object video for the input video comprises:

obtaining body mesh information of a virtual object that is driven;
adapting the corrected pose information to the virtual object based on the body mesh information of the virtual object, to drive the virtual object to perform an action for the corrected pose information, to generate the virtual object video for the input video.

11. A video frame data processing apparatus, comprising:

a first obtaining module, configured to obtain an input video, and determine initial three-dimensional (3D) pose information, two-dimensional (2D) pose information, and foot ground contact information of an object in the input video;
a first determining module, configured to determine pose change information between two adjacent video frames of the input video based on the initial 3D pose information of the object;
a second determining module, configured to determine pose information of the object based on the initial 3D pose information of the object and the pose change information;
a first processing module, configured to perform correction processing on the pose information of the object based on the 2D pose information and the foot ground contact information of the object, to obtain corrected pose information of the object; and
a motion application module, configured to apply the corrected pose information to a virtual object, to generate a virtual object video for the input video.

12. An electronic device, comprising:

a memory, configured to store a computer-executable instruction; and
a processor, configured to execute the computer-executable instruction stored in the memory to implement the method according to any one of claims 1 to 10.

13. A computer-readable storage medium, storing a computer-executable instruction, the computer-executable instruction, when executed by a processor, implementing the method according to any one of claims 1 to 10.

14. A computer program product, comprising a computer program or a computer-executable instruction, the computer program or the computer-executable instruction, when executed by a processor, implementing the method according to any one of claims 1 to 10.

100

Server 400

Perform motion capture
on an input video to
obtain corrected motion
information, and
adapt the corrected
motion information to a
virtual object, to obtain a
virtual object video

Virtual object video

Input video

Network 300

Terminal
200

Input video

Virtual object video

App

FIG. 1

Server 400

Memory 450

| Operating system 451 |

| Network communication module 452 |

| Presentation module 453 |

Network interface 420

| Input processing module 454 |

Processor 410

| Virtual object generation apparatus 455 |

| First obtaining module 4551 |

| First determining module 4552 |

440

| Second determining module 4553 |

| First processing module 4554 |

User interface 430

| Motion application module 4555 |

Output device 431

Input device 432

FIG. 2

Obtain an input video, and determine initial 3D pose information, 2D pose information, and foot ground contact information of an object in the input video — 101

Determine pose change information between two adjacent video frames of the input video based on the initial 3D pose information of the object — 102

Determine pose information of the object based on the initial 3D pose information of the object and the pose change information — 103

Perform correction processing on the pose information of the object based on the 2D pose information and the foot ground contact information of the object, to obtain corrected pose information of the object — 104

Applying the corrected pose information to a virtual object, to generate a virtual object video for the input video — 105

FIG. 3A

Determine initial 3D pose information, 2D pose information, and foot ground contact information of an object in the input video ⟶ 101

Obtain a trained 3D pose estimation model, a trained 2D pose estimation model, and a trained foot ground contact detection model ⟶ 1011

Perform pose estimation on the input video by using the trained 3D pose estimation model, to obtain the initial 3D pose information of the object in the input video ⟶ 1012

Perform pose estimation on the input video by using the trained 2D pose estimation model, to obtain the 2D pose information of the object ⟶ 1013

Perform prediction processing on the 2D pose information of the object by using the trained foot ground contact detection model, to obtain the foot ground contact information of the object ⟶ 1014

FIG. 3B

Determine pose change information between two adjacent video frames of the input video based on the initial 3D pose information of the object ⟶ 102

Obtain a trained motion prior model ⟶ 1021

Perform prediction processing on the initial pose parameter of the object by using the trained motion prior model, to obtain the pose change information between the two adjacent video frames of the input video ⟶ 1022

FIG. 3C

Obtain a training video and a preset motion prior model — 211

Determine a $k^{th}$ training video frame and a $(k+1)^{th}$ training video frame as a $k^{th}$ training data pair — 212

Perform encoding processing on the two video frames in the $k^{th}$ training data pair, to obtain encoding results of the two video frames in the $k^{th}$ training data pair in a latent space — 213

Determine pose change information of the two video frames in the $k^{th}$ training data pair based on the encoding results of the two video frames in the $k^{th}$ training data pair in the latent space — 214

Train the preset motion prior model based on pose change information of two video frames in each training data pair, to obtain the trained motion prior model — 215

FIG. 3D

Determine pose information of the object based on the initial 3D pose information of the object and the pose change information ⟋⌒ 103

Divide the input video into a plurality of video clips ⌒1031

↓

Determine the initial 3D pose information of the object as the pose information of the object when it is determined that an $i^{th}$ video frame is the first frame in the video clips ⌒1032

↓

Obtain corrected pose information of the object in an $(i-1)^{th}$ video frame when it is determined that the $i^{th}$ video frame is not the first frame in the video clips ⌒1033

↓

Determine a pose parameter of the object based on pose change information of the object from the $(i-1)^{th}$ video frame to the $i^{th}$ video frame and the corrected pose parameter of the object in the $(i-1)^{th}$ video frame ⌒1034

↓

Determine the initial shape parameter for the object and the pose parameter of the object as the pose information of the object ⌒1035

FIG. 4A

Perform correction processing on the pose information of the object based on the 2D pose information and the foot ground contact information of the object, to obtain corrected pose information of the object ⌐~104

Determine a reprojection error of the object based on the pose information, the 2D pose information, and camera parameters of the object ~1041

Determine prior information of the object based on the pose information of the object ~1042

Determine a regular term error of the object based on foot ground contact information and corrected pose information of the object in an $(i-1)^{th}$ video frame, and foot ground contact information and pose information of the object in an $i^{th}$ video frame ~1043

Determine a total error of the object based on the reprojection error, the prior information, and the regular term error of the object ~1044

Perform iterative optimization on the pose information of the object by using a gradient descent algorithm until the total error of the object reaches a minimum value, to obtain the corrected pose information of the object ~1045

FIG. 4B

Determine a reprojection error of the object based on the pose information, the 2D pose information, and camera parameters of the object ⌐1041

Determine camera coordinate information of each joint point of the object based on the pose information and the 2D pose information of the object ⌐411

Determine image coordinate information of the joint point based on the camera parameters and the camera coordinate information of the joint point of the object ⌐412

Determine a coordinate error of the joint point based on image coordinate information of the joint point and reference coordinate information of the joint point ⌐413

Determine the reprojection error of the object based on the coordinate error of the joint point and the confidence of the joint point ⌐414

FIG. 4C

Determine prior information of the object based on the pose information of the object — 1042

Determine shape prior information of the object based on the shape parameter of the object — 421

↓

Perform encoding processing on the pose parameter of the object, to obtain an encoding result of the pose parameter in a latent space — 422

↓

Determine pose prior information of the object based on the encoding result of the pose parameter in the latent space — 423

↓

Determine the prior information of the object based on the shape prior information of the object and the pose prior information of the object — 424

FIG. 5A

Determine a regular term error of the object based on foot ground contact information and corrected pose information of the object in an $(i-1)^{th}$ video frame, and foot ground contact information and pose information of the object in an $i^{th}$ video frame    ~ 1043

Determine a position difference of each joint point of the object and a length difference of each bone of the object based on the corrected pose information of the object in the $(i-1)^{th}$ video frame and the pose information of the object in the $i^{th}$ video frame    ~ 431

Determine a foot velocity error of the object based on the foot ground contact information of the object in the $(i-1)^{th}$ video frame and the foot ground contact information of the object in the $i^{th}$ video frame    ~ 432

Determine a height difference between a foot joint point of the object and a ground    ~ 433

Determine the regular term error of the object based on the position difference of each joint point of the object, the length difference of each bone of the object, the foot velocity error of the object, and the height difference between the foot joint point and the ground    ~ 434

FIG. 5B

Apply the corrected pose information to a virtual object, to generate a virtual object video for the input video    ~ 105

Obtain body mesh information of a virtual object that is driven    1051

Adapt the corrected pose information to the virtual object based on the body mesh information of the virtual object, to drive the virtual object to perform an action for the corrected pose information    1052

FIG. 5C

FIG. 6

FIG. 7A

FIG. 7B

FIG. 7C

| Obtain a video stream | 801 |

↓

| Predict, for an inputted video, a 3D human pose by using a 3D pose estimation model | 802 |

↓

| Correct the 3D pose based on an iterative optimization method | 803 |

↓

| Adapt a 3D pose on a standard human body to different characters by motion retargeting | 804 |

## FIG. 8A

## FIG. 8B

FIG. 9

FIG. 10A

FIG. 10B

**FIG. 10C**

**FIG. 10D**

FIG. 11

## INTERNATIONAL SEARCH REPORT

| International application No. |
| --- |
| **PCT/CN2024/071344** |

| A. | CLASSIFICATION OF SUBJECT MATTER |
| --- | --- |

G06T13/40(2011.01)i; G06T17/00(2006.01)i; G06T7/73(2017.01)i

According to International Patent Classification (IPC) or to both national classification and IPC

| B. | FIELDS SEARCHED |
| --- | --- |

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNTXT, ENTXTC, DWPI, ENTXT, CNKI: 3D姿势, 3D姿态, 变化, 差值, 初始, 调整, 动画, 后一帧, 偏差, 前一帧, 三维姿势, 三维姿态, 上一帧, 生成, 视频, 数字人, 位移, 下一帧, 先验, 先验模型, 相邻帧, 修正, 虚拟, 预测, 姿势, 姿态, posture, virtual, correct+, initial, difference, forecast, posture change, estimat+, animation

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116958337 A (TENCENT TECHNOLOGY (SHENZHEN) CO., LTD.) 27 October 2023 (2023-10-27)<br>claims 1-14 | 1-14 |
| A | CN 113706699 A (TENCENT TECHNOLOGY (SHENZHEN) CO., LTD.) 26 November 2021 (2021-11-26)<br>description, paragraphs 64-88 | 1-14 |
| A | CN 115018963 A (CHENGDU DISHI WUXIAN TECHNOLOGY CO., LTD.) 06 September 2022 (2022-09-06)<br>entire document | 1-14 |
| A | CN 113961746 A (BEIJING BAIDU NETCOM SCIENCE AND TECHNOLOGY CO., LTD.) 21 January 2022 (2022-01-21)<br>entire document | 1-14 |
| A | US 2007268295 A1 (KABUSHIKI KAISHA TOSHIBA) 22 November 2007 (2007-11-22)<br>entire document | 1-14 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 March 2024** | **01 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/071344**

| Patent document cited in search report | | | Publication date (day/month/year) | Patent family member(s) | | | Publication date (day/month/year) |
|---|---|---|---|---|---|---|---|
| CN | 116958337 | A | 27 October 2023 | None | | | |
| CN | 113706699 | A | 26 November 2021 | WO | 2023071964 | A1 | 04 May 2023 |
| | | | | US | 2023290101 | A1 | 14 September 2023 |
| | | | | EP | 4307233 | A1 | 17 January 2024 |
| CN | 115018963 | A | 06 September 2022 | None | | | |
| CN | 113961746 | A | 21 January 2022 | US | 2023101704 | A1 | 30 March 2023 |
| US | 2007268295 | A1 | 22 November 2007 | JP | 2007310707 | A | 29 November 2007 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310244258